# EUROPÄISCHE PATENTSCHRIFT

(11) **EP 3 724 598 B1**
(45) Veröffentlichungstag und Bekanntmachung des Hinweises auf die Patenterteilung: **19.01.2022**
(21) Anmeldenummer: 18815646.7
(22) Anmeldetag: 06.12.2018
(51) Int. Cl.: G01B 11/24, G01B 21/04, B23F 5/16, B23F 23/00, G05B 19/401, G05B 19/4065

(54) **VERFAHREN UND VORRICHTUNG ZUR VERMESSUNG EINES WÄLZBEARBEITUNGSWERKZEUGS**
METHOD AND DEVICE FOR MEASURING A ROLL MACHINING TOOL
PROCÉDÉ ET DISPOSITIF DE MESURE D'UN OUTIL POUR L'USINAGE PAR GÉNÉRATION

(30) Priorität: 15.12.2017 CH 15262017
(43) Veröffentlichungstag der Anmeldung: 21.10.2020
(73) Patentinhaber: Reishauer AG, 8304 Wallisellen (CH)
(72) Erfinder: HUBER, Philipp, 8304 Wallisellen (CH); KIRSCH, Roger, 76307 Karlsbad (DE); MARX, Hartmut, 8304 Wallisellen (CH); MROS, Michael, 76356 Weingarten (DE); MÜLLER, Michel, 8610 Uster (CH)
(74) Vertreter: Detken, Andreas
(86) Internationale Anmeldenummer: PCT/EP2018/083747
(87) Internationale Veröffentlichungsnummer: WO 2019/115332

(56) Entgegenhaltungen:
- DE-A1- 19 927 872
- DE-A1-102007 053 993
- DE-A1-102010 054 742
- US-A1- 2012 129 434
- PED' S E ET AL: "Development of a Model Series of Hardware-Software Complexes for Automated Measurements of the Parameters of Gear-Cutting Tools", MEASUREMENT TECHNIQUES, CONSULTANTS BUREAU. NEW YORK, US, Bd. 56, Nr. 12, 29. März 2014 (2014-03-29) , Seiten 1370-1376, XP035367433, ISSN: 0543-1972, DOI: 10.1007/S11018-014-0384-5 [gefunden am 2014-03-29]

## Beschreibung

### TECHNISCHES GEBIET

Die vorliegende Erfindung betrifft ein Verfahren zur Vermessung eines Wälzbearbeitungswerkzeugs sowie eine Vorrichtung zur Durchführung des Verfahrens.

### STAND DER TECHNIK

Beim Wälzschälverfahren handelt es sich um ein kontinuierliches spanabhebendes Verfahren, bei dem zahnradartige Werkzeuge zur Bearbeitung rotierender Werkstücke verwendet werden. Das Wälzschälen kann, neben der Weichbearbeitung, insbesondere auch zur Hartfeinbearbeitung vorverzahnter Werkstücke Anwendung finden. Zur Werkstückbearbeitung werden Werkzeug und Werkstück auf Rotationsspindeln aufgenommen. Die Drehachsen von Werkzeug und Werkstück sind hierbei windschief angeordnet. Durch eine Kopplung der Drehbewegungen von Werkzeug und Werkstück um die Drehachsen wird die verfahrenstypische Wälzbewegung mit einer komplizierten Wälzschälkinematik realisiert. Mit diesem spanabhebenden Verfahren können sowohl Aussen- als auch Innenverzahnungen bearbeitet werden.

Die Zähne eines Wälzschälwerkzeugs bilden im Bereich der Stirnfläche des Werkzeugs Schneiden. Die Schneide eines jeden Zahns bildet in der Praxis nicht eine beliebig scharfe Kante, sondern ist mit einem Radius abgerundet. Die finale Zahnflanke am geschälten Werkstück wird mittels Hüllschnittbildung durch die geometrisch definierte Schneide des Wälzschälwerkzeugs ausgeformt, wobei am Ende der Wälzschälbearbeitung praktisch kein Span mehr abgenommen wird und die Berührung zwischen Werkzeug und Werkstück nur noch punktweise erfolgt. Im Verlauf der Wälzbewegung wandert der entsprechende Berührpunkt zwischen dem fertig bearbeiteten Werkstück und dem Werkzeug stetig entlang der abgerundeten Schneide. Die windschiefe Anordnung der Drehachsen von Werkzeug und Werkstück führt dabei dazu, dass der Berührpunkt nicht nur in Längsrichtung entlang der Schneide wandert, sondern gleichzeitig auch quer dazu seine Lage auf der Krümmung der Schneidzahnrundung verändert. Die im Laufe der Wälzbewegung wirkenden Berührpunkte bilden also eine Raumkurve auf der Schneidzahnrundung. Der Verlauf dieser Raumkurve wird durch die Auslegung des Werkzeugs und Einstellgrössen wie die relative Orientierung und Lage von Werkzeug und Werkstück bestimmt. Die Raumkurve lässt sich aus den Auslegungsdaten berechnen.

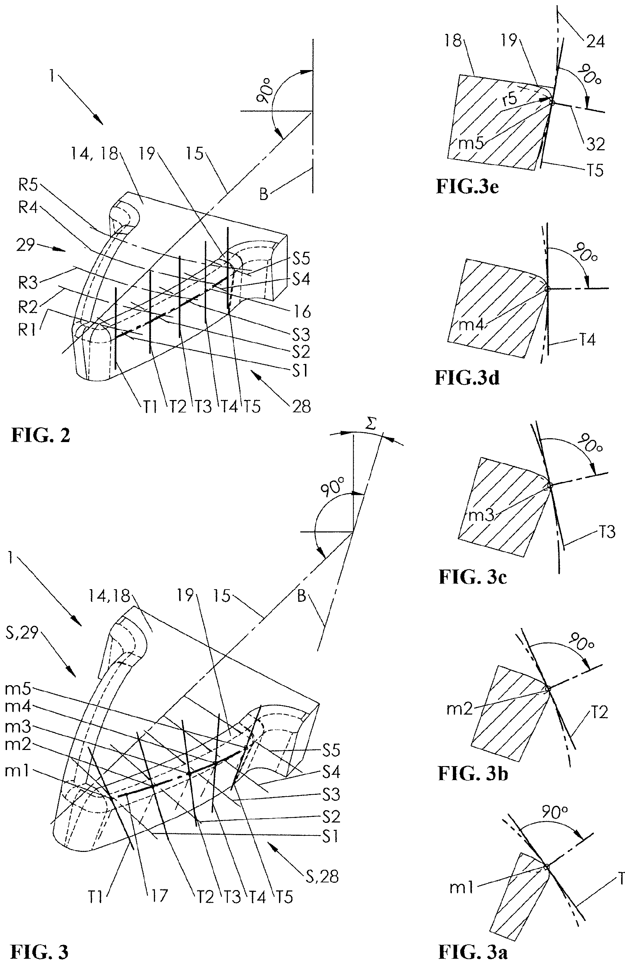

Die Dissertationen von Andreas Hühsam, "Modellbildung und experimentelle Untersuchungen des Wälzschälprozesses", Forschungsbericht Band 111, wbk Institut der Universität Karlsruhe, Shaker Verlag GmbH, 2002, Seiten 23-66 und Andreas Bechle, "Beitrag zur prozesssicheren Bearbeitung beim Hochleistungsfertigungsverfahren Wälzschälen", Forschungsbericht Band 132, wbk Institut der Universität Karlsruhe, Shaker Verlag GmbH, 2006, Seiten 26-28, diskutieren umfassend die Modellierung des Wälzschälens und die qualitätskonforme Fertigung eines Wälzschälwerkzeugs als entscheidendes Element des Wälzschälverfahrens. Hühsam stellt ein kinematisches Modell des Wälzschälens vor. Mit diesem Ansatz kann die komplexe Schneidengeometrie eines Wälzschälwerkzeugs berechnet werden. Den schematischen Vorgang zur Herstellung dieses Wälzschälwerkzeugs zeigt Bechle in der Abb. 2-21 auf Seite 28. Der Werkzeugrohling wird mittels Schleifen fertiggestellt. Nach dem ersten Schleifdurchgang wird das Wälzschälrad auf einer Messmaschine ausgemessen, und es werden die Mass- und Formgenauigkeit ermittelt. Abweichungen von der Sollgeometrie werden festgestellt und durch Korrektur des NC-Abrichtprozesses und erneutes Profilieren der Schleifscheibe beseitigt. Dieser Zyklus wiederholt sich so oft, bis Mass und Form stimmen.

Bei einer Messung mit einer herkömmlichen Messmaschine bleibt allerdings unberücksichtigt, dass die Berührpunkte auf der Schneidenrundung im Verlauf der Wälzbewegung entlang der schon erwähnten Raumkurve wandern. Eine herkömmliche Messmaschine ist nicht in der Lage, diese Raumkurve zu berücksichtigen.

Zudem ist eine Messung auf einer separaten Messmaschine nachteilig, weil das Umspannen des Werkzeugs zwischen Messmaschine und Werkzeugspindel zeitaufwändig ist und dabei Auf- und Umspannfehler entstehen können, die das Fertigungsergebnis negativ beeinflussen.

In US 2015/0081083 A1 wird vorgeschlagen, ein Wälzschälwerkzeug tastend zu vermessen. Dazu wird ein Messkörper bereitgestellt, der eine genaue Abbildung der zu bearbeitenden Flanken einer Werkstückverzahnung darstellt. Diese Art der Vermessung ermöglicht zwar eine genaue Bestimmung des an der Bearbeitungsmaschine einzustellenden Abstands zwischen Werkstück- und Werkzeugachse, eignet sich jedoch nicht für eine Vermessung der beim Wälzschälen wirkenden Schneide.

In WO 2016/150985A1 wird vorgeschlagen, die Abweichung der Lage der Kopfschneidkante, der linken Schneidkante und der rechten Schneidkante jedes Schneidzahns eines Wälzschälwerkzeugs von einer Idealkontur zu messen, um auf diese Weise Rundlauffehler zu bestimmen. Die Messung erfolgt tastend mit einer Messkugel. Bei diesem Verfahren erfolgt zwar eine Bestimmung der Lage der Schneidkante, aber keine Vermessung der eigentlichen Schneidkante selbst. Die ermittelten Lageabweichungen werden dann bei der Werkstückbearbeitung dazu verwendet, die Auswirkungen des Rundlauffehlers auf die Werkstückgeometrie zu vermindern, indem eine periodische Nichtlinearität des Kopplungsverhältnisses zwischen Werkstück- und Werkzeugdrehung oder eine periodische Änderung des Achsabstands vorgesehen wird.

Aus dem Stand der Technik sind Verfahren zur optischen Vermessung von Messobjekten bekannt, die im Durchlichtverfahren arbeiten, d.h. das Messobjekt wird zwischen eine Lichtquelle und einen Lichtdetektor gebracht, und der Lichtdetektor erkennt, wenn das Messobjekt den Lichtstrahl der Lichtquelle unterbricht.

Ein solches Verfahren ist z.B. in DE 199 27 872 A1 offenbart. Um auch Bereiche erfassen zu können, die aufgrund der Geometrie des Messobjekts ansonsten nur schwierig erfassbar wären, wird vorgeschlagen, dass die Lichtquelle und der Lichtdetektor eine Einheit bilden und auf einer Schwenkeinrichtung angebracht sind. Die Schwenkeinrichtung ist um eine Achse verschwenkbar, die die Drehachse des Messobjekts schneidet. Die Schwenkeinrichtung ist zudem entlang einer senkrecht zur Schwenkachse verlaufenden zweiten Achse translatorisch verstellbar. Das Messobjekt ist entlang einer zur ersten Achse parallelen dritten Achse verstellbar und um eine parallel zur zweiten Achse verlaufende, von der ersten Achse geschnittene vierte Achse drehbar. Dadurch besteht die Möglichkeit, z.B. bei Schneidzähnen eines rotationssymmetrischen Werkzeugs hinter der Schneide zu messen. Das Dokument gibt keine Anregung, eine derartige Anordnung zur Vermessung von Wälzschälwerkzeugen, insbesondere mit Abrundungen an der Schneide, einzusetzen.

In EP 1 050 368 A1 wird eine optische Messeinrichtung für Positioniervorrichtungen vorgeschlagen. Eine Lichtquelle und ein Lichtdetektor sind auf einem gemeinsamen Halter angeordnet und so ausgerichtet, dass ein Messlichtstrahl von der Lichtquelle auf den Lichtdetektor trifft. Der Lichtdetektor detektiert, wenn der Strahl durch ein Messobjekt unterbrochen wird. Wenn eine Unterbrechung eintritt, wird ein entsprechendes Signal generiert. Es erfolgt also eine einfache binäre Auswertung mit den Zuständen "Licht empfangen" ("L") und "kein Licht empfangen" ("0"). Der Lichtstrahl kann unkollimiert sein, d.h. er kann von der Lichtquelle zum Lichtsensor hin leicht divergieren. Vor dem Lichtdetektor ist ein enger Lichtkanal angeordnet, durch den das Licht hindurchtreten muss, um zum Lichtdetektor zu gelangen. Dadurch "sieht" der Detektor effektiv nur einen zylindrischen Strahlbereich des von der Lichtquelle ausgehenden Lichtstrahlenbündels. Der Lichtstrahl wirkt also wie eine zylindrische Tastfläche, mit der das Messobjekt abgetastet wird. Eine Anwendung für die Vermessung von Wälzschälwerkzeugen ist nicht offenbart.

Eine entsprechende Laser-Messbrücke wird z. B. unter der Bezeichnung NC4 von der Firma Renishaw, Wotton-under-Edge, UK angeboten.

US 8,411,283 B1 offenbart ein Verfahren, bei dem ein Zahnrad mittels Abstandsmessungen vermessen wird. In EP 1 398 598 A1 wird die Vermessung einer kleinen Schneidkantengeometrie mittels Linienlaser und Bilderfassung vorgeschlagen.

DE 10 2010 054 742 A1 offenbart eine Vorrichtung zum Vermessen eines Werkzeugs, das wenigstens eine Schneide mit einem Steigungswinkel aufweist. Die Vorrichtung umfasst eine Werkzeugspindel, die um eine Werkzeugrotationsachse drehbar ist, eine Bilderfassungseinheit, die eine optische Achse definiert, entlang der das Werkzeug erfassbar ist, und einen Linearverstellmechanismus, der dazu vorgesehen ist, wenigstens einen Teil der Bilderfassungseinheit und das Werkzeug parallel zu der Werkzeugrotationsachse relativ zueinander zu verfahren. Mittels einer Nachführvorrichtung wird die Bilderfassungseinheit während der Drehbewegung der Werkzeugspindel mit einer Verfahrgeschwindigkeit entlang der Werkzeugrotationsachse verfahren. Die Verfahrgeschwindigkeit hängt vom Steigungswinkel des Werkzeugs ab.

### DARSTELLUNG DER ERFINDUNG

In einem ersten Aspekt ist es eine Aufgabe der vorliegenden Erfindung, ein Messverfahren zur Vermessung der Schneide eines Wälzschälwerkzeugs anzugeben, welches eine Messung mit besonders hoher Präzision ermöglicht, automatisierbar ist und sich kostengünstig, einfach und schnell realisieren lässt.

Diese Aufgabe wird durch ein Verfahren mit den Merkmalen des Anspruchs 1 gelöst. Ausserdem wird eine Messvorrichtung zur Durchführung des Verfahrens mit den Merkmalen des Anspruchs 19 angegeben. Weitere Ausführungsformen sind in den abhängigen Ansprüchen angegeben.

Es wird also ein Verfahren zur Vermessung eines Werkzeugs für die Wälzbearbeitung verzahnter Werkstücke angegeben. Das Werkzeug ist um eine Werkzeugachse drehbar und weist eine Mehrzahl von Schneidzähnen auf. Jeder der Schneidzähne bildet mindestens eine reale Schneide. Das Verfahren wird unter Einsatz eines Messgeräts ausgeführt. Das Verfahren weist die folgenden Schritte auf, wobei diese Schritte nicht notwendig in der angegebenen Reihenfolge ausgeführt werden:
(a) Berechnen eines virtuellen Berührpunkts auf einer virtuellen Schneide eines virtuellen Werkzeugs, wobei sich die virtuelle Schneide entlang einer Schneidenlängsrichtung erstreckt und quer zur Schneidenlängsrichtung eine Abrundung aufweist;
(b) Berechnen einer Relativorientierung zwischen der Werkzeugachse und dem Messgerät sowie einer translatorischen Relativposition zwischen dem Werkzeug und dem Messgerät auf der Basis des berechneten virtuellen Berührpunkts;
(c) Einstellen der berechneten Relativorientierung zwischen der Werkzeugachse und dem Messgerät und der berechneten Relativposition zwischen dem Werkzeug und dem Messgerät; und
(d) Durchführen einer Messung an der realen Schneide in der eingestellten Relativorientierung und Relativposition,
wobei die vorstehenden Schritte (a) bis (d) für eine Mehrzahl von virtuellen Berührpunkten entlang der virtuellen Schneide durchgeführt werden.

Es wird also zunächst ein virtuelles Werkzeug betrachtet, das eine virtuelle Schneide definiert. Wie aus der nachstehenden Beschreibung hervorgeht, dient die virtuelle Schneide dazu, zu berechnen, wie die Werkzeugachse relativ zum Messgerät ausgerichtet werden sollte und wie das Werkzeug relativ zum Messgerät positioniert werden sollte, damit die Messung mit hoher Präzision erfolgen kann. Die virtuelle Schneide entspricht dabei einer vorgegebenen Schneidengeometrie, insbesondere der Soll-Schneidengeometrie gemäss Werkzeugauslegung. Diese virtuelle Schneide bildet entlang der Schneidenlängsrichtung nicht eine unendlich scharfe Kante, sondern ist zwischen Spanfläche bzw., soweit vorhanden, Spanflächenfase und Freifläche bzw., soweit vorhanden, Freiflächenfase definiert abgerundet. Die virtuelle Schneide bildet somit eine komplexe gekrümmte Fläche.

Auf dieser virtuellen Schneide befindet sich eine Raumkurve, die aus den Punkten besteht, an welchen die komplexe gekrümmte Fläche ein virtuelles Werkstück mit vorgegebener Sollflankengeometrie berühren würde, wenn das virtuelle Werkzeug mit dem virtuellen Werkstück die Wälzbewegung ausführt, wie sie auch bei der realen Bearbeitung eines realen Werkstücks mit dem realen Werkzeug stattfindet. Diese Punkte auf der virtuellen Schneide werden als virtuelle Berührpunkte bezeichnet. Die Kurve aus virtuellen Berührpunkten verläuft in der Regel nicht in einer Stirnschnittebene des Werkzeugs. Die Punkte im Raum, relativ zur Achse des virtuellen Werkstücks und zur Achse des virtuellen Werkzeugs, an denen diese Berührung über alle Wälzstellungen hinweg stattfindet, bilden ebenfalls eine Kurve, die virtuelle Eingriffslinie genannt wird. Der zu einem virtuellen Berührpunkt gehörende Punkt auf der virtuellen Eingriffslinie wird als virtueller Eingriffspunkt bezeichnet. Der virtuelle Berührpunkt auf der Schneide und der dazugehörige virtuelle Eingriffspunkt im Raum sind identisch für den Fall, dass man sich in der Wälzstellung befindet, in der der virtuelle Berührpunkt die finale Kontur der Werkstücksollflanke berührt. Auf dem virtuellen Werkstück, das der Sollgeometrie entspricht, befindet sich ebenfalls ein virtueller Berührpunkt, der in der Berührwälzstellung ebenfalls mit dem virtuellen Eingriffspunkt zusammenfällt.

Für einen ausgewählten virtuellen Berührpunkt wird nun bestimmt, wie die Werkzeugachse und das Messgerät relativ zueinander orientiert werden müssen, und wie das Werkzeug und das Messgerät relativ zueinander hinsichtlich ihrer translatorischen Position eingestellt werden müssen, damit mit dem Messgerät eine Messung im virtuellen Berührpunkt (und nicht etwa an einer anderen Stelle auf der Schneidenkrümmung) vorgenommen werden kann. Die so berechnete Orientierung und translatorische Position werden sich insbesondere für ein Wälzschälwerkzeug wegen der windschiefen Anordnung zwischen virtuellem Werkzeug und virtuellem Werkstück in der Regel von virtuellem Berührpunkt zu virtuellem Berührpunkt entlang der virtuellen Schneide ändern.

Das reale Werkzeug und das Messgerät werden nun relativ zueinander so eingestellt, wie dies zuvor berechnet wurde. Für diese Einstellung werden vorzugsweise CNC-Achsen der Maschine verwendet. In der so eingestellten Orientierung der Werkzeugachse relativ zum Messgerät und der so eingestellten Position des Werkzeugs relativ zum Messgerät wird anschliessend eine Messung an der realen Schneide des realen Werkzeugs vorgenommen. Wenn sich die Schneidengeometrie des realen Werkzeugs von derjenigen des virtuellen Werkzeugs im berechneten virtuellen Berührpunkt unterscheidet, quantifiziert die Messung die Abweichung am virtuellen Berührpunkt. Insbesondere kann zur Vornahme der Messung eine weitere Relativbewegung des Werkzeugs relativ zum Messgerät durchgeführt werden; z.B. kann zur Vornahme der Messung das reale Werkzeug um die Werkzeugachse gedreht und die Abweichung als Drehwinkeldifferenz ausgedrückt werden, um die das reale Werkzeug verdreht werden muss, damit die reale Schneide und die virtuelle Schneide im virtuellen Berührpunkt zusammenfallen.

Die vorstehenden Schritte können dann für einen oder mehrere weitere virtuelle Berührpunkte entlang der virtuellen Schneide wiederholt werden. Auf diese Weise wird die Schneide an mehreren Stellen entlang ihrer Längsrichtung vermessen. Insbesondere können die oben genannten Schritte (a) bis (d) für mindestens fünf virtuelle Berührpunkte entlang der virtuellen Schneide durchgeführt werden, um eine genügend detaillierte Aussage über die reale Schneidengeometrie zu ermöglichen.

Um zwischen den Messwerten für virtuelle Berührpunkte auf der Schneide zu interpolieren, kann aus den Messergebnissen, die für unterschiedliche Berührpunkte auf derselben Schneide ermittelt wurden, in an sich bekannter Weise mittels Ausgleichsrechnung eine Ausgleichskurve für die Beschreibung der realen Schneide berechnet werden.

Um die Relativorientierung zwischen der Werkzeugachse und dem Messgerät einzustellen, ist es grundsätzlich denkbar, jeweils die Orientierung und Position des Messgeräts im Raum zu verändern, während die Orientierung der Werkzeugachse und die Position des Werkzeugs feststeht. Alternativ ist es denkbar, die Orientierung der Werkzeugachse und die Position des Werkzeugs im Raum zu verändern, während das Messgerät feststeht. Auch Mischformen sind möglich. Meistens sind jedoch an einer Werkzeugmaschine ohnehin schon die nötigen CNC-Achsen vorhanden, die es ermöglichen, die Orientierung der Werkzeugachse im Raum zu verändern und die Position des Werkzeugs im Raum einzustellen. Es ist daher von Vorteil, wenn das Messgerät während der Durchführung des Verfahrens räumlich feststehend angeordnet ist und die Einstellung der Relativorientierung und der Relativposition für den jeweiligen virtuellen Berührpunkt erfolgt, indem die Orientierung der Werkzeugachse im Raum und die Position des Werkzeugs im Raum verändert werden.

Das vorgeschlagene Verfahren kann mit unterschiedlichsten Messverfahren eingesetzt werden. Es eignet sich jedoch besonders für ein Messverfahren, bei dem die Schneide des Werkzeugs tangential abgetastet wird. Dazu kann das Messgerät ein berührungslos oder berührend arbeitendes Tastmittel bereitstellen, und die Relativorientierung und die Relativposition werden derart berechnet und eingestellt, dass das Tastmittel die virtuelle Schneide im berechneten virtuellen Berührpunkt tangential berührt. Das Tastmittel kann dabei ein berührend wirkendes, körperliches Tastmittel (ein realer, dauerhaft vorhandener Körper) sein, z.B. ein Tastfinger, oder es kann sich um ein berührungslos wirkendes, nicht körperliches Tastmittel handeln, z.B. in Form eines Lichtstrahles.

Weitere Vorteile ergeben sich, wenn das Tastmittel von zylindrischer Form ist und dadurch eine zylindrische Tastfläche definiert, da es dann für die Messung nicht auf die Lage des Werkzeugs entlang der Zylinderachse des Tastmittels ankommt. Dies erleichtert die Einstellung der Lage des Werkzeugs und des Messgeräts relativ zueinander und vereinfacht den Messvorgang.

Wenn das Tastmittel von zylindrischer Form ist, definiert dieses eine Zylinderachse, und die zylindrische Tastfläche verläuft in einem Abstand von der Zylinderachse, die dem Zylinderradius entspricht. In einer vorteilhaften Ausgestaltung werden die Relativorientierung und die Relativposition dann derart berechnet und eingestellt, dass die Zylinderachse des zylindrischen Tastmittels parallel zur Tangentialebene auf der virtuellen Schneide im berechneten virtuellen Berührpunkt verläuft, und zwar in einem Abstand von dieser Tangentialebene, der dem Zylinderradius entspricht. Somit enthält die zylindrische Tastfläche den virtuellen Berührpunkt und liegt dort tangential an die virtuelle Schneide an.

Beim Einsatz eines zylindrischen Tastmittels in der vorstehend genannten Weise verläuft die Zylinderachse in einer Ebene, die parallel zu Tangentialebene auf der virtuellen Schneide im berechneten virtuellen Berührpunkt liegt. Dabei verbleibt immer noch ein Freiheitsgrad für die Ausrichtung der Zylinderachse innerhalb dieser Ebene. Diese Ausrichtung kann vorteilhaft so gewählt werden, dass die Zylinderachse im Wesentlichen entlang der Flankenrichtung des virtuellen Werkstücks verläuft. Diese Ausrichtung des zylindrischen Tastmittels vermindert im Falle eines körperlichen Tastmittels das Risiko von Kollisionen mit anderen Werkzeugbereichen. Im Falle eines Tastmittels in Form eines Lichtstrahls vermindert diese Ausrichtung das Risiko, dass der Lichtstrahl durch andere Werkzeugbereiche abgeschattet wird.

Wenn das Tastmittel durch einen Lichtstrahl gebildet wird, kann das Verfahren in einfacher Weise wie folgt ausgeführt werden: Zur Durchführung der Messung wird das Werkzeug in der jeweils eingestellten Relativorientierung der Werkzeugachse und bei der jeweils eingestellten Relativposition zwischen Werkzeug und Messgerät im Schritt (d) um die Werkzeugachse gedreht, und während der Drehung wird detektiert, bei welchem Ist-Drehwinkel der Lichtstrahl durch die Schneide unterbrochen wird. Dadurch entstehen abwechselnd Signale "L" (Lichtstrahl nicht unterbrochen, Detektor hell) und "0" (Lichtstrahl unterbrochen, Detektor dunkel). Auf dieser Basis kann eine Abweichung zwischen dem detektierten Ist-Drehwinkel und einem für die virtuelle Schneide berechneten Soll-Drehwinkel ermittelt werden. Diese Abweichung ist ein direktes Mass für die Abweichung der Ist-Schneidengeometrie von der Soll-Schneidengeometrie. Ein Vorteil des vorgeschlagenen Verfahrens liegt darin, dass diese Abweichung nicht an irgendeiner vorgegebenen oder zufälligen Stelle auf der Krümmung der Schneide ermittelt wird, sondern genau an der Stelle, an der sich Werkstück und Werkzeug final berühren würden, wenn das Werkzeug die vorgegebene Sollgeometrie hätte. Die Messung erfolgt also genau an denjenigen Punkten, auf die es bei der Bearbeitung tatsächlich ankommt und an denen die Schneide daher besonders präzise vermessen werden sollte.

Die Messung im Schritt (d) kann in der jeweils eingestellten Relativorientierung und Relativposition für mehrere oder alle Schneidzähne des Werkzeugs durchgeführt werden, sodass mehrere oder alle Schneidzähne nacheinander den Lichtstrahl unterbrechen und wieder freigeben. Auf diese Weise können schnell und effizient mehrere Schneidzähne an den relevanten virtuellen Berührpunkten vermessen werden, ohne dass die Relativorientierung zwischen Werkzeugachse und Messgerät und die Relativposition zwischen diesen Messungen verändert werden müssen.

Aus Messungen an mehreren oder allen Schneidzähnen kann mindestens einer der folgenden Parameter bestimmt werden:
- Werkzeugrundlauf;
- Schneidzahnmitte;
- Mitte der Zahnlücke.

Aus Messungen an einem, mehreren oder allen Schneidzähnen kann eine der folgenden Grössen bestimmt werden:
- mindestens ein Mass für die Abweichung des Profils einer mit der realen Schneide gefertigten Flanke zu einer mit der virtuellen Schneide (insbesondere der Soll-Schneide) gefertigten virtuellen Flanke (z.B. Profilformfehler, Teilungsfehler);
- mindestens ein Mass für die Veränderung der Schneide während der Bearbeitung, zum Beispiel durch Verschleiss.

Das Verfahren kann ausserdem mindestens die folgenden Schritte umfassen:
(e) Ermitteln mindestens einer Einstellung für eine Maschinensteuerung aufgrund eines Ergebnisses der Messungen, wobei die Einstellung bewirkt, dass eine Relativposition zwischen dem Werkzeug und einem Werkstück für die Bearbeitung des Werkstücks eingestellt wird; und
(f) Übergeben der Einstellung an die Maschinensteuerung.

In anderen Worten kann aufgrund der ermittelten Schneidengeometrie die Einstellung des Werkzeugs relativ zum Werkstück verändert werden, um z.B. die Abnutzung der Schneide auszugleichen.

Die in Schritt (e) ermittelte Einstellung kann auch an ein externes Computersystem übergeben werden, welches die Einstellungen zu mehreren Zeitpunkten abspeichert und für ein Nachschärfen des Werkzeugs aufbereitet. Die Übergabe kann dabei über Standardschnittstellen erfolgen.

Das Verfahren kann ausserdem das Visualisieren eines Ergebnisses der Messung auf einem Bildschirm umfassen, insbesondere auf einem Bildschirm einer Bedientafel einer CNC-Maschinensteuerung.

Beim Werkzeug kann es sich insbesondere um ein Wälzschälwerkzeug oder ein Wälzstosswerkzeug handeln.

Insbesondere bei einem Wälzschälwerkzeug weist das hier vorgeschlagene Verfahren besondere Vorteile auf, weil sich durch die windschiefe Anordnung der Rotationsachsen von Werkzeug und Werkstück sowie die quasi nichtevolventische, komplexe Schneidengeometrie Besonderheiten ergeben, die bei herkömmlichen Messverfahren in der Regel nicht genügend berücksichtigt werden.

Insbesondere kann es sich bei dem Werkzeug um ein Wälzschälwerkzeug mit variablen Spanflächenfasen handeln, wie es in der Schweizer Patentanmeldung CH 01412/16 vom 21.10.2016 beschrieben wird.

Das Verfahren kann ausgeführt werden, während sich das Werkzeug auf einer Werkzeugspindel befindet, mit der auch die Bearbeitung von Werkstücken stattfindet. In anderen Worten kann das Verfahren direkt auf der Maschine ausgeführt werden, mit der auch die Werkstückbearbeitung stattfindet. Es ist also nicht nötig, das Werkzeug zunächst auf die Spindel einer separaten Messmaschine umzuspannen. Es ist aber auch denkbar, das Verfahren auf einer separaten Messmaschine durchzuführen.

Vor der Durchführung des eigentlichen Messverfahrens können zusätzlich Verfahrensschritte zur Kalibrierung der Messposition in der Maschine ausgeführt werden. Derartige Kalibrierungsschritte können bei Bedarf während eines Bearbeitungszyklus wiederholt werden.

Eine Vorrichtung zur Durchführung eines derartigen Verfahrens weist auf:
- eine Werkzeugspindel zum Antreiben des Werkzeugs zu einer Drehung um die Werkzeugachse;
- das schon erwähnte Messgerät;
- mindestens eine angetriebene Schwenkachse, um die Relativorientierung zwischen der Werkzeugachse und dem Messgerät zu verändern; und
- mindestens eine angetriebene Linearachse, um die translatorische Relativposition zwischen dem Werkzeug und dem Messgerät zu verändern.

Die Vorrichtung weist dann ausserdem eine Steuerung auf, die dazu ausgebildet ist, das oben dargestellte Verfahren auszuführen. Die oben angegebenen Überlegungen zum Verfahren gelten gleichermassen auch für die erfindungsgemässe Vorrichtung. Die Steuerung kann insbesondere eine Software aufweisen, die bei der Ausführung durch einen Prozessor der Steuerung bewirkt, dass die Steuerung das oben dargestellte Verfahren ausführt.

Die Vorrichtung kann mehr als eine Schwenkachse aufweisen, um die Orientierung der Werkzeugachse im Raum relativ zum Messgerät frei einstellen zu können. In diesem Fall sind die Schwenkachsen vorzugsweise nicht parallel zueinander und verlaufen vorzugsweise orthogonal zueinander. Die Vorrichtung kann entsprechend auch mehr als eine Linearachse aufweisen, um die translatorische Relativposition zwischen dem Werkzeug und dem Messgerät frei zu verändern. Die Richtungen der zwei bzw. drei Linearachsen sind dann vorzugsweise im mathematischen Sinne linear unabhängig und vorzugsweise ebenfalls orthogonal zueinander.

Insbesondere kann die Anordnung der Schwenk- und Linearachsen nach folgenden Regeln ausgeführt werden:
- Das Messgerät ist ortsfest auf dem Maschinenbett angeordnet, und die Ausrichtung und Positionierung des Werkzeugs im Raum erfolgen mittels mindestens einer Linearachse sowie mittels mindestens einer Schwenkachse; oder
- das Messgerät ist fest auf einem verschiebbaren Schlitten angeordnet, der mindestens entlang einer Linearachse verschiebbar ist, und die Ausrichtung und

Positionierung des Werkzeugs im Raum erfolgen mittels mindestens einer Schwenkachse.

In beiden Ausführungsvarianten können weitere Schwenk- und/oder Linearachsen für das Werkzeug und/oder für das Messgerät vorgesehen sein.

Insbesondere kann auf dem Werkzeugträger einer bekannten Verzahnmaschine gemäss einem Maschinenkonzept nach US 6,565,418 B1 oder nach US 5,857,894 ein Wälzschälkopf anstelle eines Schleifkopfes angeordnet werden. Das Messgerät kann in diesen Maschinen wie folgend angeordnet werden:
(i) Beim Maschinenkonzept der Verzahnmaschine nach US 6,565,418 B1 ist ein Wälzschälkopf auf einem Werkzeugträger angeordnet, der gegenüber dem Maschinenbett verschiebbar ist. Das Maschinenbett trägt ausserdem einen bewegbaren, insbesondere verschiebbaren oder schwenkbaren, Werkstückträger. Das Messgerät kann dann auf diesem Werkstückträger angeordnet und mittels dieses bewegbaren Werkstückträgers von einer Parkstellung in eine Messstellung bewegbar sein. Bei diesem Maschinenkonzept realisiert der bewegbare Werkzeugträger mit Wälzschälkopf drei lineare Achsen X, Y und Z sowie eine Schwenkachse A und eine Rotationsachse B. Zusätzlich ist eine weitere Linear- oder Schwenkachse C^{∗} vorhanden, die den Werkstückträger mit dem Messgerät von der Parkstellung in die Messstellung und zurück bewegt. Der bewegbare Werkstückträger kann weiteren Zwecken dienen. Insbesondere kann auf dem bewegbaren Träger ausserdem mindestens eine Werkstückspindel zum Aufspannen eines zu bearbeitenden Werkstücks angeordnet sein.
(ii) Beim Maschinenkonzept nach US 5,857,894 ist der Wälzschälkopf auf einem Werkzeugträger angeordnet, der gegenüber dem Maschinenbett verschieb- und schwenkbar ist. Das Maschinenbett trägt ausserdem einen ortsfesten Werkstückträger mit Werkstückspindel. Das Messgerät kann dann ortsfest auf diesem Maschinenbett angeordnet sein. Bei diesem Maschinenkonzept realisiert der bewegbare Werkzeugträger mit Wälzschälkopf ebenfalls drei lineare Achsen X, Y und Z sowie eine Schwenkachse A und eine Rotationsachse B. Zusätzlich ist auch hier eine weitere Linear- oder Schwenkachse C^{∗} vorhanden; diese dient aber dazu, den Werkzeugträger (und nicht, wie beim vorstehend geschilderten Maschinenkonzept, den Werkstückträger) zu verschwenken. Der Werkzeugträger ist in diesem Fall bevorzugt zwischen einer Arbeitsstellung, in der ein auf der Werkzeugspindel angebrachtes Werkzeug in Eingriff mit einem Werkstück bringbar ist, und einer Messstellung, in der das Werkzeug mit dem Messgerät zusammenwirkt, bewegbar, insbesondere verschwenkbar.

Wie schon ausgeführt wurde, kann das Messgerät ein berührungslos oder berührend wirkendes Tastmittel bereitstellen, und die Steuerung kann die Relativorientierung und die Relativkoordinaten derart berechnen und einstellen, dass das Tastmittel die virtuelle Schneide im berechneten virtuellen Berührpunkt tangential berührt. Dabei ist es wie erwähnt von Vorteil, wenn das Tastmittel von zylindrischer Form ist.

Das Messgerät kann insbesondere eine Lichtschranke bilden. Dazu kann das Messgerät eine Lichtquelle und einen Lichtdetektor aufweisen, wobei die Lichtquelle dazu ausgebildet ist, einen Lichtstrahl zu erzeugen, der auf den Lichtdetektor ausgerichtet ist. Das Tastmittel wirkt in diesem Fall berührungslos und wird durch mindestens einen Bereich des Lichtstrahls gebildet. Bevorzugt sind die Lichtquelle und der Lichtdetektor derart ausgestaltet, dass effektiv ein zylindrischer Strahlbereich des Lichtstrahls als Tastmittel wirkt. Die Steuerung wirkt derart mit der Werkzeugspindel zusammen, dass die Werkzeugspindel das Werkzeug zur Durchführung der Messung in der eingestellten Relativorientierung der Werkzeugachse und bei den eingestellten Relativkoordinaten um die Werkzeugachse dreht. Der Lichtdetektor ist dann dazu ausgebildet, während der Drehung zu detektieren, bei welchem Ist-Drehwinkel der Lichtstrahl durch die Schneide unterbrochen wird. Die Lichtquelle kann insbesondere einen Laser umfassen, so dass das Messgerät eine Laserbrücke bildet. Der Laser kann insbesondere einen Strahl von kreiszylindrischer Form erzeugen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Werkstück- und Werkzeugzuordnung mit Wälzschälwerkzeug sowie Messvorrichtung und weitere Bausteine einer Wälzschälmaschine;
- Fig. 1a: eine vergrösserte Detailansicht der Fig. 1 im Bereich D1;
- Fig. 2: eine perspektivische Ansicht eines Schneidzahns eines Wälzschälwerkzeugs mit senkrechter Achslage der Werkzeugspindel, wobei achsparallele zylindrische Tastflächen in fester Orientierung an der Schneide anliegen;
- Fig. 3: eine perspektivische Ansicht eines Schneidzahns eines Wälzschälwerkzeugs in windschiefer Achslage (analog zur Achsstellung beim Bearbeiten), wobei zylindrische Tastflächen in unterschiedlichen Orientierungen an der Schneide anliegen;
- Fig. 3a: eine vergrösserte Schnittansicht in Ebene S1 der Fig. 3 im Berührpunkt m1;
- Fig. 3b: eine vergrösserte Schnittansicht in Ebene S2 der Fig. 3 im Berührpunkt m2;
- Fig. 3c: eine vergrösserte Schnittansicht in Ebene S3 der Fig. 3 im Berührpunkt m3;
- Fig. 3d: eine vergrösserte Schnittansicht in Ebene S4 der Fig. 3 im Berührpunkt m4;
- Fig. 3e: eine vergrösserte Schnittansicht in Ebene S5 der Fig. 3 im Berührpunkt m5;
- Fig.4: eine perspektivische Ansicht eines virtuellen Werkstücks im Eingriff mit einem virtuellen Werkzeug zur Verdeutlichung der Lage einer zylindrischen Tastfläche;
- Fig. 4a: eine vergrösserte Detailansicht der Fig. 4 im Bereich D2, wobei zur besseren Darstellung einer gekrümmten Zahnflanke noch Flächenkurven eingetragen sind;
- Fig. 5: eine andere perspektivische Ansicht eines Schneidzahns nach Fig. 3 mit fünf Messspuren und zugehörigen zylindrischen Tastflächen in den Berührpunkten auf der wirksamen Schneide;
- Fig. 5a: eine Seitenansicht eines Schneidzahns nach Fig. 5 mit zugehörigen Z-Werten der fünf Berührpunkte;
- Fig. 5b: eine Draufsicht eines Schneidzahns nach Fig. 5 mit fünf Messspuren und zugehörigen Winkelpositionen;
- Fig. 6: eine weitere perspektivische Ansicht eines Schneidzahns nach Fig. 3 und 5;
- Fig. 6a: eine schematische Schnittansicht in Ebene S1der Fig. 6 in windschiefer Achslage (analog zur Achsstellung beim Bearbeiten);
- Fig. 6b: eine schematische Schnittansicht in Ebene S1 der Fig. 6 mit tangential anliegendem Laserstrahl im Berührpunkt ml in vertikaler Lage;
- Fig. 6c: eine schematische Schnittansicht in Ebene S5 der Fig.6 in windschiefer Achslage (analog zur Achsstellung beim Bearbeiten);
- Fig. 6d: eine schematische Schnittansicht in Ebene S5 der Fig. 6 mit tangential anliegendem Laserstrahl im Berührpunkt m5 in vertikaler Lage;
- Fig. 7: eine perspektivische Ansicht einer vertikal angeordneten Laserbrücke beim Prüfen eines Wälzschälwerkzeugs und schematischer Darstellung eines entsprechenden L/0- Signalbandes;
- Fig. 7a: eine vergrösserte Detailansicht der Fig. 7 im Bereich D3, wobei L- und 0-Signale sowie der Rundlauf des Werkzeugs schematisch dargestellt sind;
- Fig. 8: ein Diagramm zur schematischen Darstellung der Messwerte an den virtuellen Berührpunkten eines mit beispielsweise 75 Schneidzähnen ausgeführten Wälzschälwerkzeugs, wobei schematisch Ist-Werte, berechnete Ausgleichskurve, Schneidzahnmitte, Zahnteilung und ein Toleranzbereich dargestellt sind;
- Fig. 9: eine Seitenansicht einer Anordnung mit vertikal angeordneter Laserbrücke und Werkzeugspindel;
- Fig. 9a: eine perspektivische Ansicht nach Fig. 9 mit Rotations- und Linearachsen zum Messen;
- Fig. 10: eine Seitenansicht einer Anordnung mit gekippt angeordneter Laserbrücke und Werkzeugspindel;
- Fig. 10a: eine perspektivische Ansicht nach Fig. 10;
- Fig. 11: eine perspektivische Ansicht einer Anordnung mit einem scannenden und taktilen Taster;
- Fig. 11a: eine vergrösserte Detailansicht der Fig. 11 im Bereich D4;
- Fig. 12: eine perspektivische Ansicht einer Verzahnmaschine zum Wälzschälen mit einem Wälzschälkopf auf einem verschiebbaren Werkzeugträger und mit zwei Werkstückspindeln auf einem schwenkbaren Werkstückträger, wobei der Werkstückträger die Messvorrichtung trägt;
- Fig. 12a: eine vergrösserte Detailansicht der Fig. 12 im Bereich D5;
- Fig. 13: eine perspektivische Ansicht einer Verzahnmaschine mit einer Werkstückspindel zum Wälzschälen mit einem Wälzschälkopf auf einem verschieb- und schwenkbaren Werkzeugträger, wobei eine Messvorrichtung fest auf einem Maschinenbett angeordnet ist;
- Fig. 13a: eine vergrösserte Detailansicht der Fig. 13 im Bereich D6;
- Fig. 14: eine perspektivische Ansicht zum Kalibrieren mit Kalibrierdorn und gekippt angeordneter Laserbrücke;
- Fig. 14a: eine Vorderansicht der Fig. 14 mit Achsstellungen in Y- Richtung;
- Fig. 14b: eine Seitenansicht der Fig. 14 mit Achsstellungen in X- Richtung; und
- Fig. 15: eine perspektivische Ansicht einer Anordnung zur Post-Prozess-Messung des Werkstücks mit einem scannenden, taktilen Taster.

### BESCHREIBUNG BEVORZUGTER AUSFÜHRUNGSFORMEN

Die für Stirnräder geltenden Begriffe und Verzahnungsgeometrien sind festgelegt in der Norm DIN ISO 21771:2014-08 und werden in diesem Dokument in Einklang mit dieser Norm verstanden.

In den Zeichnungen werden Ausführungsformen des erfindungsgemässen Verfahrens jeweils schematisch und vergrössert dargestellt. In allen Figuren werden für gleiche bzw. gleichartige Flächen, Achsen, Winkel oder weitere Elemente übereinstimmende Bezugszeichen verwendet. Virtuelle Objekte wie virtuelle Werkzeuge, virtuelle Werkstücke usw. werden mit dem Buchstaben "v" bezeichnet, welcher dem Bezugszeichen für das entsprechende reale Objekt nachgestellt wird. Die Beschreibungen zu den Figuren erfolgen generell für das Wälzschälen von Aussenverzahnungen. Für das Wälzschälen von Innenverzahnungen gelten analoge Betrachtungen.

Ausführungsbeispiele des erfindungsgemässen Verfahrens werden im Folgenden insbesondere anhand eines realen Wälzschälwerkzeugs 1 und eines virtuellen Wälzschälwerkzeugs 1v erläutert. Das Wälzschälwerkzeug 1 bzw. 1v ist zahnradförmig und weist eine Vielzahl von Schneidzähnen 14 (siehe z.B. Figur 2) auf, die im Bereich der Stirnseite des Werkzeugs jeweils eine abgerundete Schneide bilden. Es wird darauf hingewiesen, dass dieses Werkzeug in den Zeichnungen stark vereinfacht dargestellt ist. Die nachstehenden Überlegungen lassen sich für beliebige Wälzschälwerkzeuge, auch solche mit Treppenschliff oder anderen geometrischen Gestaltungen anwenden.

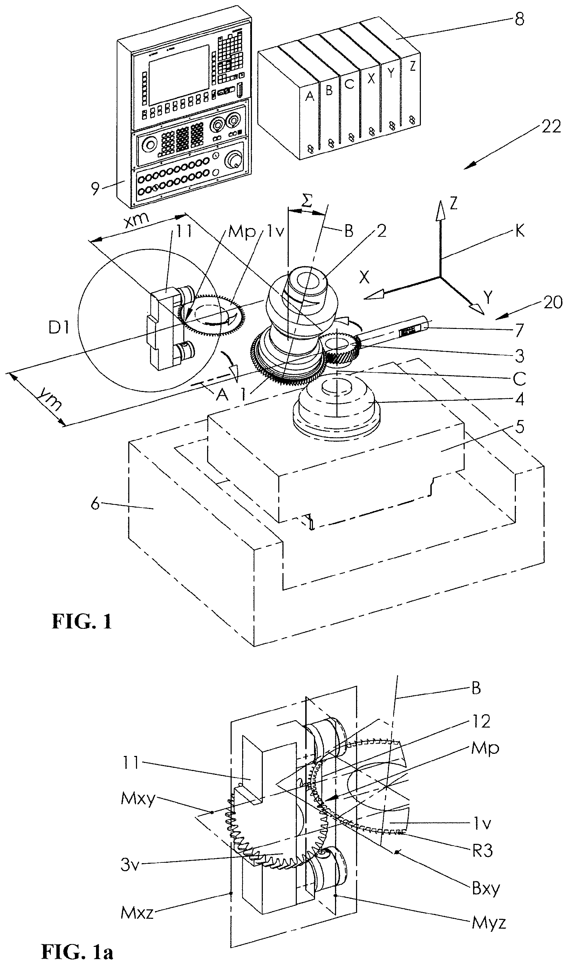

Die Figur 1 zeigt beispielhaft eine perspektivische Ansicht von ausgewählten Elementen einer modernen CNC-Wälzschälmaschine 22. Zur Beschreibung von Richtungen in der Wälzschälmaschine wird ein rechtwinkliges Koordinatensystem K verwendet, welches die Richtungen X, Y und Z definiert. Der Ursprung des Koordinatensystems liegt in der Werkstückmitte bzw. der Werkstückachse C. Eine CNC-Steuerung 8 dient dazu, die Maschinenachsen A, B, C, X, Y und Z anzusteuern. Eine Bedientafel 9 bildet das Interface für das Bedienpersonal zur CNC-Steuerung 8.

Die Maschine definiert einen Arbeitsraum 20. Sie weist ein Maschinenbett 6 auf. Im vorliegenden Beispiel ist hierbei eine Werkstückspindel 4 auf einem CNC-gesteuerten Zustellschlitten 5 mit Verschiebung in Y-Richtung angeordnet. Auf der Werkstückspindel 4 wird mit Hilfe eines zeichnerisch nicht dargestellten Spannmittels ein Werkstück 3 aufgespannt. Die Werkstückspindel 4 ist um eine Werkstückachse C drehbar, wobei die Werkstückachse im vorliegenden Beispiel vertikal verläuft. Eine Einzentriersonde 7 dient dazu, berührungslos die Winkellage der Zahnlücken des Werkstücks 3 um die Werkstückachse C zu ermitteln, um das Werkstück 3 kollisionsfrei in das Wälzschälwerkzeug 1 einzufädeln.

Das Wälzschälwerkzeug 1 ist auf einer Werkzeugspindel 2 montiert und um eine Werkzeugachse B drehbar. Die Werkzeugachse B kann weiterhin mit der Achse A um einen Werkzeugeinstellwinkel Σ gegenüber der Vertikalen verschwenkt werden, wobei die Schwenkachse A im vorliegenden Beispiel parallel zur X-Achse verläuft. Dazu kann die Maschine 22 in bekannter Weise einen nicht zeichnerisch dargestellten Werkzeugträger mit daran schwenkbar befestigtem Schwenkkörper aufweisen, an dem wiederum die Werkzeugspindel 2 befestigt ist. Die Werkzeugspindel 2 ist mittels nicht dargestellter Schlitten (im Folgenden auch als Maschinenachsen bezeichnet) entlang der Richtungen X und Z gegenüber dem Maschinenbett 6 verschiebbar. Ist alternativ die CNC-Wälzschälmaschine 22 mit einer ortsfesten Werkstückspindel 4 ausgerüstet, dann ist die Werkzeugspindel 2 auch noch in Y-Richtung verschieblich.

Die Maschine 22 weist ausserdem eine Laserbrücke 11 auf. Die Laserbrücke umfasst eine Lichtquelle in Form eines Lasers, der einen vertikal (in Z-Richtung) verlaufenden Laserstrahl erzeugt, und einen Lichtdetektor, der eine Unterbrechung des Laserstrahls durch ein Objekt erfasst. Der Laserstrahl verläuft in einem Abstand zur Werkstückachse C, wobei der Laserstrahl um einen Betrag xm entlang der X-Achse und einen Betrag ym entlang der Y-Achse gegenüber der Werkstückachse C beabstandet ist. Im vorliegenden Beispiel ist die Laserbrücke 11 fest am verschiebbaren Zustellschlitten 5 auf dem Maschinenbett 6 angeordnet. Alle zur Messung erforderlichen Bewegungen werden durch die rotatorischen und translatorischen Maschinenachsen A, B, X, Y und Z ausgeführt. Insbesondere wird die Werkzeugspindel 2 entlang den translatorischen Achsen X und Z aus der Achsstellung zum Bearbeiten des Werkstücks 3 verfahren und durch Verschwenken um die Schwenkachse A in eine Winkelposition Σ1 in eine geeignete Orientierung gebracht. Die beabstandete Laserbrücke 11 wird dann durch Verschieben des Y-Schlittens 5 in eine Achsstellung zum Vermessen des Wälzschälwerkzeugs 1 gefahren. Wenn die Laserbrücke 11 alternativ ortsfest auf dem Maschinenbett 6 angeordnet ist, dann sind alle translatorischen Achsen X, Y und Z der Werkzeugspindel 2 zugeordnet.

In einer sehr vereinfachten Ausführung dieser festen Anordnung der Laserbrücke 11 könnte nur eine Linearachse zur linearen Positionierung des Werkzeugs 1 genutzt werden. Dabei würde die X-Achse das Werkzeug 1 weg vom Werkstück 3 in die Achsstellung zum Messen verschieben. Die Z-Achse wäre beim Einsatz einer Laserbrücke 11 mit zylindrischem Laserstrahl 12 nicht zwingend erforderlich, würde aber beim Wegfall Genauigkeitsnachteile verursachen. Ein Verzicht auf die Y-Achse würde dagegen das nachstehend beschriebene Messverfahren partiell einschränken.

Die relative Positionierung und Ausrichtung von Messbrücke 11 und Werkzeug 1 kann auch auf andere Weise als vorstehend beschrieben realisiert werden.

Zusätzlich ist in der Figur 1 ein virtuelles Werkzeug lv mit der Messposition Mp dargestellt. Die Bedeutung des virtuellen Werkzeugs 1v wird nachstehend im Zusammenhang mit der Figur 1a näher erläutert.

Die Figur 1a zeigt eine vergrösserte Detailansicht der Laserbrücke 11 im Bereich D1 mit dem windschief angeordneten, virtuellen Werkzeug 1v sowie mit einem virtuellen Werkstück 3v, welches mit dem virtuellen Wälzschälwerkzeug 1v in Wälzeingriff steht. Ebenfalls in der Figur 1a eingezeichnet sind mehrere Bezugsebenen Mxy, Mxz, Myz und Bxy. Dabei definieren die Bezugsebenen Mxy, Mxz, Myz die Lage und Orientierung der Laserbrücke 11. Insbesondere enthält die Bezugsebene Mxz im vorliegenden Beispiel den Laserstrahl 12 und verläuft durch das Gehäuse der Laserbrücke. Die Bezugsebene Myz enthält ebenfalls den Laserstrahl 12 und verläuft orthogonal zur Bezugsebene Mxy. Die Bezugsebene Mxy verläuft horizontal und orthogonal zu den beiden vertikalen Bezugsebenen Mxz und Myz. Sie definiert die Mitte der Laserbrücke. Die Messposition Mp befindet sich im gemeinsamen Schnittpunkt der Ebenen Mxy, Mxz, Myz. Die Bezugsebene Bxy verläuft orthogonal zur Werkzeugachse B und stellt eine Stirnschnittebene des virtuellen Werkzeugs 1v dar, wobei diese Stirnschnittebene durch die Schneiden des virtuellen Werkzeugs 1v verläuft.

Das virtuelle Werkzeug 1v und das virtuelle Werkstück 3v stehen im Wälzeingriff miteinander. Das virtuelle Werkstück 3v weist eine vorgegebene Sollflankengeometrie auf. Das virtuelle Werkzeug 1v weist eine Vielzahl von virtuellen Schneidzähnen auf, wie sie beispielhaft in den Figuren 2, 3, 5 und 6 dargestellt sind. Jeder Schneidzahn definiert eine abgerundete virtuelle Schneide. Diese virtuelle Schneide ist derart ausgelegt, dass sie durch die Wälzbewegung des Werkzeugs 1v mit dem Werkstück 3v genau die vorgegebene Sollflankengeometrie des Werkstücks 3v generiert. Das virtuelle Werkzeug 1v und das virtuelle Werkstück 3v berühren sich auf einer beliebigen vorgegebenen Flanke zu jedem Zeitpunkt der Wälzbewegung höchstens in einem einzigen virtuellen Berührpunkt. Im Verlauf der Wälzbewegung wandert die Berührung von Berührpunkt zu Berührpunkt auf der abgerundeten Schneide vom Zahnfuss zum Zahnkopf des Schneidzahns oder umgekehrt. Aufgrund der Drehbewegung des virtuellen Werkzeugs 1v beschreibt die virtuelle Eingriffslinie eine komplexe Raumkurve. Die Lage eines virtuellen Eingriffspunkts im Raum kann ohne Weiteres in Abhängigkeit vom betrachteten virtuellen Berührpunkt des virtuellen Werkzeugs 1v berechnet werden, wenn die Werkzeugauslegung bekannt ist.

Das virtuelle Werkstück 3v und das virtuelle Werkzeug 1v sind in der Figur 1a derart ausgerichtet und positioniert, dass der Laserstrahl 12 im Wesentlichen parallel zu einer der Flanken des virtuellen Werkstücks 3v entlang von dessen Schrägungswinkel ausgerichtet ist und genau durch den virtuellen Eingriffspunkt verläuft, und zwar in der Wälzstellung, in der ein virtueller Berührpunkt des virtuellen Werkzeugs 1v das virtuelle Werkstück 3v berührt und mit dem virtuellen Eingriffspunkt zusammenfällt. Der Laserstrahl 12 verläuft also in der Figur 1a durch einen Punkt auf der Schneide des virtuellen Werkzeugs 1v, in dem diese Schneide die Flanke des virtuellen Werkstücks 3v berührt, und zwar tangential zur Flanke des virtuellen Werkstücks 3v in dessen virtuellem Berührpunkt und tangential zur Schneide des virtuellen Werkzeugs 1v in dessen virtuellem Berührpunkt. Die dazu nötige Ausrichtung und Position des virtuellen Werkzeugs 1v hängt von jedem virtuellen Berührpunkt entlang der Schneide ab. So erfordert ein virtueller Berührpunkt in der Nähe des Zahnfusses des Schneidzahns eine andere Ausrichtung und Positionierung des virtuellen Werkzeugs 1v als ein virtueller Berührpunkt in der Nähe des Zahnkopfs. Die nötige Ausrichtung und Position des virtuellen Werkzeugs 1v lässt sich für jeden virtuellen Berührpunkt auf der Schneide ohne Weiteres berechnen.

Für eine Messung am realen Werkzeug 1 wird nun das reale Werkzeug genau in diejenige Position und Orientierung gebracht, in der sich in der Figur 1a das virtuelle Werkzeug 1v befindet. Das reale Werkzeug wird nun um die Werkzeugachse B gedreht, und es wird beobachtet, bei welchen Drehwinkeln die Schneidzähne des realen Werkzeugs den Laserstrahl 12 unterbrechen. Wenn die Schneidengeometrie des realen Werkzeugs 1 nicht mit der Schneidengeometrie des virtuellen Werkzeugs 1v am ausgewählten Berührpunkt übereinstimmt, werden die so ermittelten Drehwinkel von denjenigen Drehwinkeln abweichen, bei denen das virtuelle Werkzeug 1v den Laserstrahl unterbrechen würde. Diese Abweichung ist ein Mass für die Abweichung der realen Schneidengeometrie von der virtuellen Schneidengeometrie in dem ausgewählten virtuellen Berührpunkt.

Diese Messung wird nun für weitere virtuelle Berührpunkte entlang der Schneide des virtuellen Werkzeugs 1v wiederholt.

Während der Messung beschreibt der Laserstrahl 12 in der Bezugsebene Bxy vom sich drehenden Werkzeug aus betrachtet jeweils eine Kreisbahn. Der Radius der Kreisbahn hängt vom virtuellen Berührpunkt auf der Schneide des virtuellen Werkzeugs 1v ab. Für einen virtuellen Berührpunkt am Zahnfuss des Schneidzahns ist der Radius kleiner als für einen virtuellen Berührpunkt am Zahnkopf. Die entsprechende Kreisbahn wird im Folgenden als Messspur bezeichnet. In der Figur 1a ist eine dieser Messspuren eingezeichnet und mit der Bezeichnung R3 versehen. In der Praxis werden Messungen für mindestens fünf Messspuren mit unterschiedlichen Radien durchgeführt, wobei die Berührpunkte unterschiedliche Radien der entsprechenden Messspur definieren. Für jeden Berührpunkt bzw. jeden Radius einer Messspur erfolgt die Messung in einer anderen relativen Stellung zwischen dem Werkzeug 1 und der Laserbrücke 11. Diese Stellung wird dabei gerade so gewählt, dass die Messung an derjenigen Stelle der Schneide stattfindet, an der die Schneide auch bei der tatsächlichen Bearbeitung wirkt, nämlich beim Berührpunkt während der Bearbeitung. Dadurch werden Messfehler vermieden, die entstehen würden, falls das Werkzeug für verschiedene virtuelle Berührpunkte auf der Schneide einfach immer in derselben Orientierung vermessen würde. Dies wird nachstehend anhand der Figuren 2 und 3 näher erläutert.

In der Figur 2 ist ein einzelner Schneidzahn 14 eines Wälzschälwerkzeugs 1 mit vertikaler Achslage B der Werkzeugspindel 2 dargestellt, wobei der Schneidzahn genau gemäss der Werkzeugauslegung gefertigt wurde. Der Schneidzahn 14 weist eine linke Schneide 28 und eine rechte Schneide 29 auf. Zwischen Spanfläche 18 und Schneide ist jeweils eine Spanflächenfase 19 ausgebildet. Anhand der Figur 2 wird ein nicht erfindungsgemässes Verfahren erläutert, bei dem die Messungen an den Schneiden erfolgen, ohne dass der Verlauf der Berührpunkte über die Schneiden berücksichtigt wird. Im Verfahren der Figur 2 erfolgt die Messung für alle Positionen entlang der Schneide immer in derselben relativen Orientierung zwischen Werkzeug 1 und Laserstrahl 12. Dazu wird der Laserstrahl 12 in der Figur 2 als zylindrische Tastfläche verstanden und abhängig von der relativen Position zwischen Werkzeug 1 und Laserstrahl als T1 bis T5 bezeichnet. Die zylindrischen Tastflächen T1 bis T5 stehen bei diesem Verfahren immer parallel zur Werkzeugachse B, unabhängig von der zu vermessenden Position auf der jeweiligen Schneide. Wenn nun das Werkzeug durch den Laserstrahl hindurch rotiert wird, beschreibt der Laserstrahl bzw. die Tastfläche relativ zum Werkzeug eine Kreisbahn R1 bis R5. Dabei unterbricht die Schneide 28 den Laserstrahl immer an ihrem äussersten Rand, d.h. an der Kante 16 zur angrenzenden Freifläche hin, und gibt ihn auch erst an ihrem äussersten Rand wieder frei. Der Punkt, an dem die Schneide 28 den Laserstrahl unterbricht, entspricht jedoch nicht dem tatsächlichen Berührpunkt zwischen Schneide und Werkstück bei der Werkstückbearbeitung: Der tatsächliche Berührpunkt wird wegen der windschiefen Anordnung von Werkzeug und Werkstück in aller Regel weiter entfernt von der Freifläche auf der abgerundeten Schneide liegen. Aus der Figur 2 ist ersichtlich, dass durch diese Abweichung Messfehler entstehen können. Da der Radius, mit dem die Schneide abgerundet ist, üblicherweise im Mikrometerbereich liegt, entstehen durch dieses herkömmliche Verfahren also Messfehler im Mikrometerbereich.

Anhand der Figur 3 und den Figuren 3a bis 3e wird im Folgenden das erfindungsgemässe Verfahren näher erläutert. In der Figur 3 ist wiederum ein Schneidzahn 14 dargestellt, der genau gemäss der Werkzeugauslegung gefertigt wurde, allerdings in einer um einen Winkel Σ verkippten Orientierung. Auf der linken Schneide 28 (im Folgenden auch vereinfacht pauschal als Schneide S bezeichnet) dieses Zahnes 14 sind Berührpunkte m1 bis m5 eingezeichnet, in denen die Schneide während der Werkstückbearbeitung die Zahnflanke eines fertig bearbeiteten Werkstücks berühren würde, wobei jeder der Berührpunkte m1bis m5 einem anderen Wälzwinkel zwischen Werkzeug und Werkstück entspricht. Die Berührpunkte m1bis m5 lassen sich aus der Werkzeugauslegung ohne Weiteres berechnen. Sie liegen auf einer Bahn, die über die abgerundete Schneide hinweg verläuft. Die Verbindung dieser Berührpunkte m1 bis m5 bildet die Ausgleichskurve 17. Man erkennt, dass diese Bahn erheblich von der Kante 16 in der Figur 2 abweicht.

Das erfindungsgemässe Verfahren berücksichtigt diese Abweichung. Die Werkzeugachse wird dazu für jeden Berührpunkt m1 bis m5 jeweils um einen anderen Winkel Σ gegenüber der Vertikalen verkippt, so dass der Laserstrahl 12 bzw. die zylindrischen Tastflächen T1 bis T5 die Schneide jeweils in dem betreffenden Berührpunkt m1 bis m5 tangential berühren. Die dazu erforderlichen Werte des Winkels Σ lassen sich ebenfalls anhand der Werkzeugauslegung ohne Weiteres berechnen. Auf diese Weise kann durch die Messung die Geometrie der Schneide entlang der Bahn des Berührpunkts exakt erfasst werden. Dabei gilt: Die Flächennormale der Schneide steht im jeweiligen Berührpunkt m1 bis m5 immer im Lot zur bearbeiteten Flanke des Werkstücks, und der Laserstrahl bzw. die zylindrische Tastflächen T1 bis T5 stehen entsprechend immer im rechten Winkel zu diesem Lot.

Die Figuren 3a bis 3e zeigen in vergrösserten Schnitten in den Ebenen S1 bis S5 schematisch die geometrischen Verhältnisse an den Berührpunkten m1 bis m5. In der Figur 3e sind stellvertretend für die Figuren 3a bis 3d alle hier relevanten Bezugszeichen eingetragen (Berührpunkt m5, Radius r5, Spanfläche 18, Spanflächenfase 19, räumliche Bewegungsbahn 24 des Berührpunkts, Lot 32 an der Schneide). Man erkennt, wie sich die Lage des Berührpunkts m1 bis m5 auf der Krümmung von Berührpunkt zu Berührpunkt verändert, und wie sich entsprechend die dazu tangentiale Richtung der zylindrischen Tastfläche T1 bis T5 relativ zur Werkzeugachse B verändert. Soll die abgerundete rechte virtuelle Schneide 29 vermessen werden, dann erfolgt analog eine weitere Messrunde auf veränderten Achsstellungen.

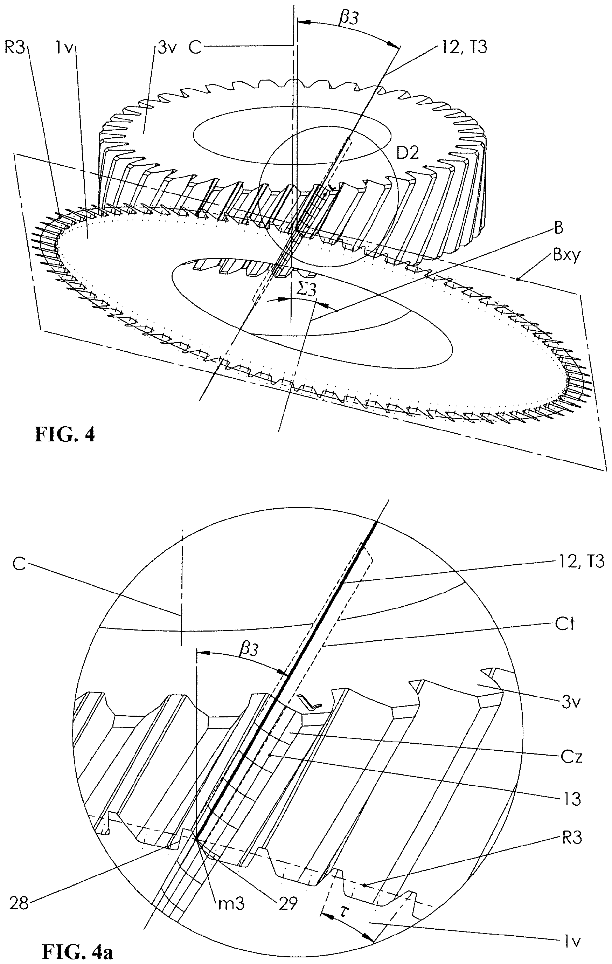

In den Figuren 4 und 4a wird ein virtuelles Werkstück 3v gezeigt, welches durch das virtuelle Werkzeug 1v bearbeitet wird. Das virtuelle Werkstück 3v entspricht einem mit dem virtuellen Werkzeug 1v fertig bearbeiteten Werkstück. Anhand dieser Darstellung soll noch einmal die Lage einer zylindrischen Tastfläche, hier der Tastfläche T3 bzw. des Laserstrahls 12, im Raum erläutert werden. Die Werkzeugachse B des virtuellen Werkzeugs 1v ist um den Winkel Σ3 in ihre Messstellung eingeschwenkt. Die rechte Schneide 29 des virtuellen Werkzeugs 1v berührt die gekrümmte Zahnflanke Cz des virtuellen Werkstücks 3v im Berührpunkt m3. Die Krümmung wird dabei durch die Flächenkurven 13 angedeutet. Die Tastfläche T3 bzw. der Laserstrahl 12 verläuft nun so, dass die Tastfläche T3 auf der gekrümmten Zahnflanke Cz in der zum Berührpunkt m3 zugehörigen Tangentialebene Ct liegt und in Flankenrichtung, d.h. in Richtung des Schrägungswinkels (hier angedeutet durch den Winkel β3), ausgerichtet ist.

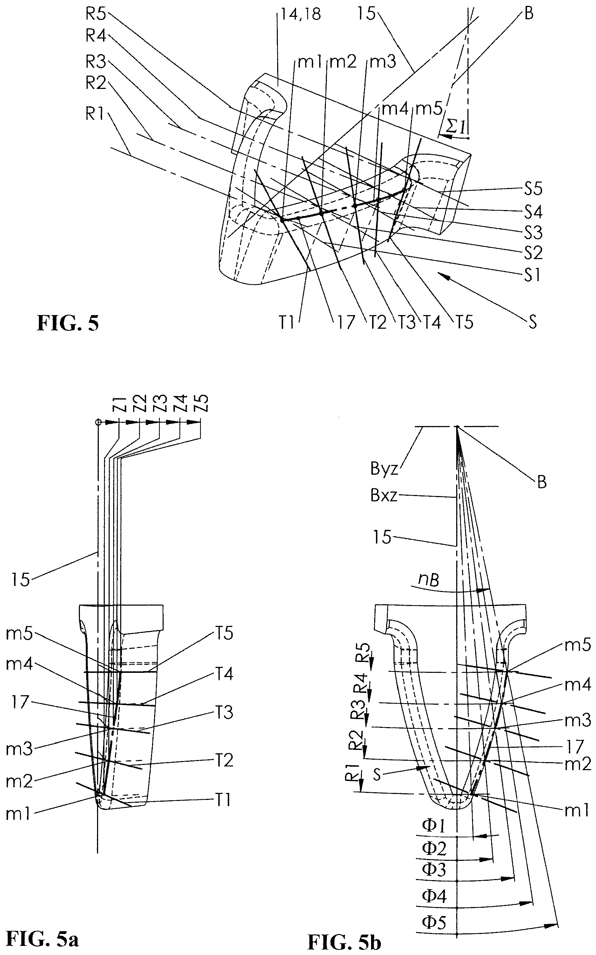

In den Figuren 5, 5a und 5b werden verschiedene Ansichten eines Schneidzahns 14 mit fünf Berührpunkten m1 bis m5, fünf dazugehörigen Messspuren R1 bis R5 und fünf dazugehörigen zylindrischen Tastflächen T1 bis T5 gezeigt. Die Figur 5 zeigt dabei eine perspektivische Ansicht analog zur Figur 3. Die Figur 5a zeigt die Seitenansicht dieses Schneidzahns 14. Man erkennt, dass die einzelnen Berührpunkte m1 bis m5 jeweils unterschiedliche Positionen Z1 bis Z5 entlang der Z-Achse besitzen. Sie liegen also nicht in einer gemeinsamen Ebene senkrecht zur Z-Achse. Daher muss die Z-Position des Werkzeugs für die Messungen an den unterschiedlichen Berührpunkten m1 bis m5 jeweils verändert werden.

Die Figur 5b zeigt eine Draufsicht des Schneidzahns 14. Wird das Wälzschälwerkzeug 1 mit dem Schneidzahn 14 beispielsweise auf der Messspur R1 an der zylindrischen Tastfläche T1 vorbei bewegt, kann der Drehwinkel Φ1 bestimmt werden, bei dem die Schneide die Tastfläche T1 im Berührpunkt m1 berührt, indem ein 0-Signal der Laserbrücke ermittelt wird. Für die weiteren Messspuren R2 bis R5 werden analog die Drehwinkel Φ2 bis Φ5 erfasst, wobei die zylindrischen Tastflächen T2 bis T5 jeweils eine veränderte Winkellage relativ zur Werkzeugachse B besitzen. Die Erfassung dieser Drehwinkel ermöglicht ein exaktes Abbild der Berührpunkte auf der Schneide S.

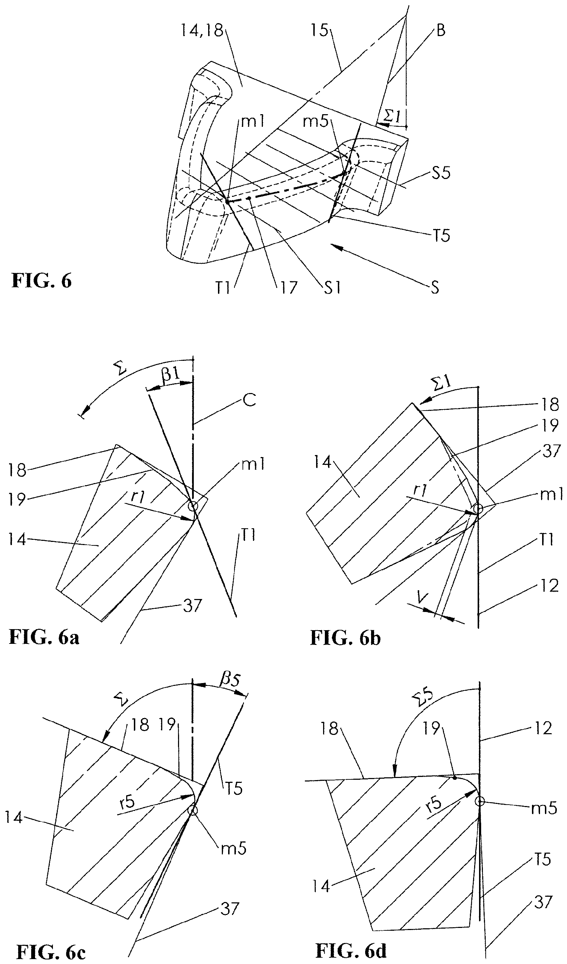

In Figur 6 ist wieder eine perspektivische Ansicht eines Schneidzahns 14 analog Figur 3 dargestellt, wobei nur zwei Berührpunkte m1 und m5 mit zugehörigen Schnittebenen S1 und S5 und zugehörigen Tastflächen T1 und T5 eingezeichnet sind. Die Tastflächen können wiederum durch einen Laserstrahl 12 realisiert sein. Die Figuren 6a bis 6d zeigen schematisch Schnitte durch den Schneidzahn 14 in den Ebenen S1 und S5, wobei folgende Erläuterungen gelten:
- Figur 6a zeigt in Ebene S1 einen Schnitt in der Achsstellung zum Bearbeiten und Figur 6b in der Achsstellung zum Messen des Berührpunkts m1.
- Figur 6c zeigt in Ebene S5 einen Schnitt in der Achsstellung zum Bearbeiten und Figur 6d in der Achsstellung zum Messen des Berührpunkts m5.
- In der relevanten Achsanordnung zum Messen sind die zylindrischen Tastflächen T1 und T5 immer räumlich fest und vertikal angeordnet.

Um das Werkzeug von der Achsstellung zum Bearbeiten zur Achsstellung zum Messen des ersten Berührpunkts m1 zu bringen und relativ zur zylindrischen Tastfläche auszurichten, werden die vorhandenen Maschinenachsen eingesetzt. Dazu fährt die Werkzeugspindel 2 und je nach Ausführung der Erfindung auch die Werkstückspindel 4 mittels der translatorischen Achsen X und Y zur Messposition Mp. Dabei steht die Werkzeugspindel 2 zunächst noch im ursprünglichen Einstellwinkel Σ. Mittels der weiteren Achse Z wird der erste Berührpunkt m1 auf dem Schneidzahn 14 in die Mitte des Laserstrahles 12 auf der Höhe der horizontalen Ebene Mxy (vgl. Fig. 1a) gebracht. Bei Bedarf werden hierzu nochmals die X- und Y-Achsen verwendet. Bei der Ausrichtung der Achsen zum Messen schwenkt die Werkzeugspindel 2 mittels der Schwenkachse A in den neuen Einstellwinkel Σ1, wobei der bisherige Werkzeugeinstellwinkel Σ um den Schrägungswinkel β1 im Berührpunkt m1 korrigiert wird. Dadurch erfolgt eine Transformation der Einstellwerte von der Achsstellung zum Bearbeiten in die Achsstellung zum Messen am ausgewählten Berührpunkt. Nach dem Einschwenken auf den Werkzeugeinstellwinkel Σ1 fährt die Werkzeugspindel 2 mit definierter Drehzahl nB mindestens eine volle Spindelumdrehung ab, und die Drehwinkel Φ, bei denen der Laserstrahl durch die Schneide unterbrochen wird, werden erfasst. Nach der ersten Messung wird die Werkzeugspindel 2 in die Achsstellung zum Messen im nächsten Berührpunkt m2 gefahren, und der Ablauf wiederholt sich analog bis zur Messung im Berührpunkt m5. Die Reihenfolge dieser Messungen kann auch umgekehrt erfolgen. Nach der Messung der Berührpunkte auf einer Seite der Schneide werden analog die Berührpunkte auf der anderen Schneidenseite gemessen. Hierzu kann die gleiche oder eine geänderte Drehrichtung der Werkzeugspindel 2 verwendet werden.

Mit einem berührungslos arbeitenden Laserstrahl 12 können beim Messen problemlos Spindeldrehzahlen nB grösser 60 U/min verwendet werden. Damit ist eine komplette Messung mit mindestens fünf Messspuren R1 bis R5 in weniger als 5 bis 10 Sekunden durchführbar. Nach fünf Messrunden sind im Normalfall ausreichend viele Messwerte aufgenommen und in der CNC-Steuerung 8 tabellarisch abgespeichert. Nunmehr können diese Werte nach Bedarf mit in der Messtechnik üblichen Methoden ausgewertet werden. Bei Bedarf kann die Zahl der Messrunden erhöht werden. Im vorstehenden Beispiel ist der Laserstrahl 12 bzw. die Tastfläche T1 bis T5 vertikal angeordnet. Stattdessen kann der Laserstrahl aber auch jede beliebige andere Orientierung im Raum haben. Bei einem anders angeordneten Laserstrahl bzw. einer anders angeordneten Tastfläche erfolgt analog die Transformation der Einstellwerte von der Achsstellung zum Bearbeiten in die zum jeweils zu messenden Berührpunkt zugehörige Achsstellung zum Messen.

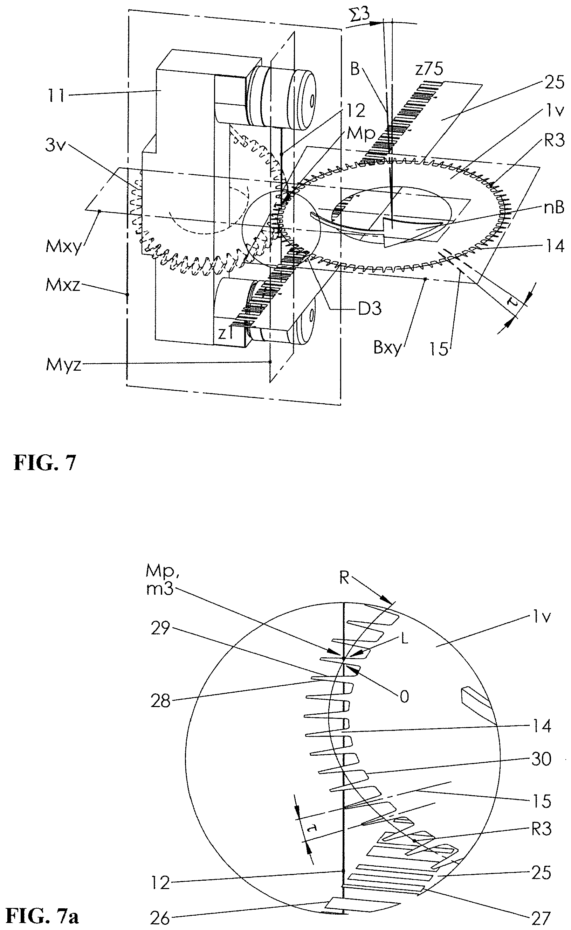

In Figur 7 wird eine Messvorrichtung 11 mit vertikalem Laserstrahl 12 gezeigt, wobei sich ein virtuelles Wälzschälwerkzeug 1v mit dem Berührpunkt m3 in der Messposition Mp befindet. Das virtuelle Wälzschälwerkzeug 1v kann hierbei auch als eine vereinfachte Darstellung eines realen Werkzeugs 1 in einer Stirnschnittebene Bxy aufgefasst werden. Die Spindelachse B bzw. die Stirnschnittebene Bxy sind um den zuvor erläuterten Werkzeugeinstellwinkel Σ3 eingeschwenkt. Die Messposition Mp liegt im festen Schnittpunkt der Ebenen Mxy, Mxz und Myz. Ebenfalls dargestellt ist ein virtuelles Werkstück 3v, das mit dem virtuellen Wälzschälwerkzeug 1v in Wälzeingriff steht, wobei der Laserstrahl 12 im gemeinsamen Berührpunkt m3 tangential die Zahnflanke Cz berührt. Dieses virtuelle Werkstück 3v ist rein zur visuellen Erläuterung dargestellt.

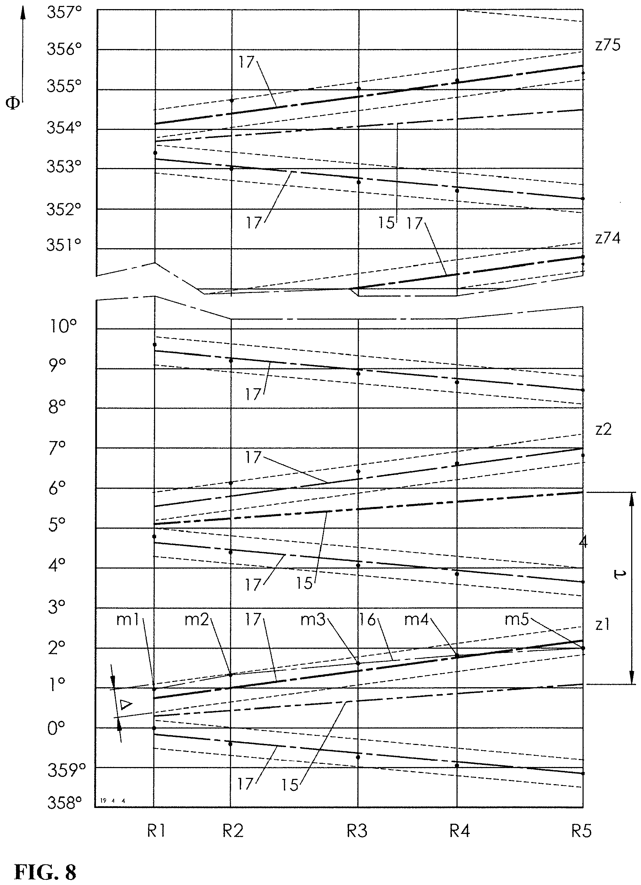

Das virtuelle Wälzschälwerkzeug 1v rotiert mit der Spindeldrehzahl nB am Laserstrahl 12 vorbei, wobei abwechselnd ein L-Signal 26 und ein 0-Signal 27 pro Schneidzahn 14 entstehen. Der Schneidzahn 14 unterbricht den Laserstrahl 12, wobei ein 0-Signal 27 entsteht. In der Zahnlücke wird dieser Laserstrahl 12 wieder freigegeben, und es entsteht ein L-Signal 26. Sowohl beim L-Signal 26 als auch beim 0-Signal 27 wird die entsprechende Winkelposition der CNC-Werkzeugspindel B erfasst. Zu beachten ist dabei, dass bei der ersten Messrunde für beispielsweise die rechte Schneide 29 nur die 0-Signale 27 bewertet und tabellarisch in der CNC-Steuerung 8 abgespeichert werden. In der zweiten Messrunde werden bei gleicher Drehrichtung der Werkzeugspindel B, aber veränderter Achsstellung für die linke Schneide 28, nur die L-Signale bewertet und ebenfalls tabellarisch abgespeichert. In der CNC-Steuerung 8 werden die Messwerte jeder Messspur zugeordnet, und ein mögliches finales Ergebnis wird schematisch in Figur 8 gezeigt. An einem vom Laserstrahl 12 weggeschwenkten ersten Schneidzahn 14 ist weiterhin in Figur 7a dargestellt, dass mit dieser ersten Messung mittels L/0-Signalen eine erste Schneidzahnmitte 15 in windschiefer Position definiert werden kann. Wird diese Mitte 15 als Referenzwert verwendet, dann können sich die folgenden Winkelpositionen der Werkzeugspindel B auf diesen Wert beziehen.

Dabei kann es ausreichen, nur in einer Messspur R3 jede einzelne Schneidzahnmitte 15 zu ermitteln und hieraus einen Mittelwert zu bilden. Liegt dieser Mittelwert innerhalb eines definierten Toleranzbereiches Δ, dann kann die Bearbeitung ohne Bedenken starten. Eine Messung in nur einer Messspur kann auch für die Messung des Rundlaufs R ausreichen, wobei die Rundlaufmessung analog zur Erfassung der Schneidzahnmitte erfolgt. Zur Erfassung der Schneidenform des Schneidzahns 14 sind jedoch Messungen in mehreren, vorzugsweise mindestens fünf Messspuren R1 bis R5 erforderlich.

Die L/0-Signale an einem zahnförmigen Werkzeug 1v können schematisch auch als ein lineares L/0-Signalband 25 dargestellt werden. Bei 75 Schneidzähnen z1 bis z75 am Werkzeug 1v ergeben sich auch 75-mal L- und 0-Signale. Die gemessenen Abweichungen können damit visuell sehr gut dargestellt werden, insbesondere auf dem Bildschirm einer Bedientafel 9.

In Figur 7a ist eine vergrösserte Detailansicht im Bereich D3 am Berührpunkt m3 gezeigt. In dieser Ansicht sind zur Erläuterung die Schneiden 28, 29, 30 und 31 beispielhaft dargestellt. Weiterhin sind dargestellt: virtuelles Werkzeug 1v, Laserstrahl 12, Schneidzahn 14, Schneidezahnmitte 15 in windschiefer Position, L- und 0-Signale 26, 27, Berührpunkt m3, Messposition Mp, Rundlauf R, Messspur R3 und Teilungswinkel τ.

In der Figur 8 sind die Winkelpositionen Φ der L/0-Signale für jede Messspur R1 bis R5 schematisiert dargestellt. Diese Winkelpositionen können wie schon genannt in der CNC-Steuerung 8 abgespeichert, auf dem Bildschirm der Bedientafel 9 dargestellt und je nach Bedarf für die verschiedensten Messaufgaben verwendet werden. Mittels mathematischer Standardverfahren zur Ausgleichsrechnung können mit der Methode der kleinsten Fehlerquadrate z.B. relativ einfach und schnell der Rundlauf R, die Schneidzahnmitte 15 und/oder der Teilungswinkel τ ermittelt werden. Zur Erfassung der räumlichen Schneiden S werden mehrere, bevorzugt mindestens fünf Messspuren R1 bis R5 abgefahren. Die Geometrie der Schneide S mit der Ausgleichskurve 17 kann dann ebenfalls mit der Methode der kleinsten Fehlerquadrate aus den Messwerten ermittelt werden. Ein Vergleich mit einer zuvor berechneten idealen Schneide 21 ist dann möglich. Zur Überprüfung der Messergebnisse kann in kürzester Zeit eine weitere Messspur abgefahren werden. Gestrichelt eingezeichnet sind vorgegebene Toleranzbänder (Toleranzspanne Δ).

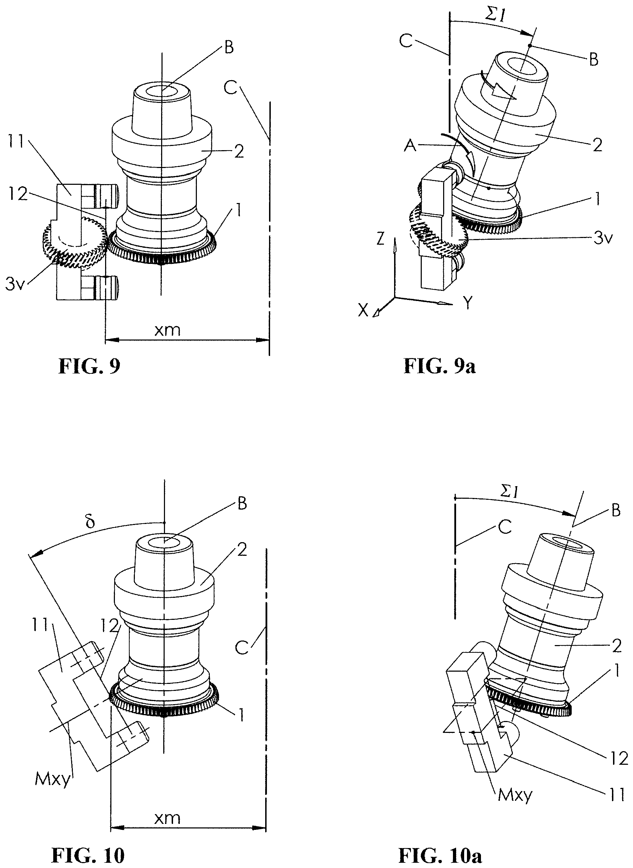

Die Figuren 9, 9a, 10 und 10a illustrieren, dass die Laserbrücke 11 nicht notwendigerweise vertikal ausgerichtet sein muss. In den Figuren 9 und 9a ist die Laserbrücke wie zuvor beschrieben derart ausgerichtet, dass der Laserstrahl 12 vertikal, parallel zur Z-Achse verläuft. Wenn der Laserstrahl 12 exakt zylindrisch ist, bzw. wenn der bei der Messung wirksame Bereich des Laserstrahls 12 von exakt zylindrischer Form ist, spielt bei dieser Anordnung die exakte Position des Werkstücks 1 entlang der Z-Achse keine Rolle. Eine exakte Positionierung in Z-Richtung ist also nicht erforderlich. Insbesondere muss sich das Werkzeug 1 für die Messung nicht notwendigerweise in der Bezugsebene Mxy der Figur 1a befinden. In den Figuren 10 und 10a ist dagegen die Laserbrücke 11 aus der Vertikalen heraus um die Y-Achse mit dem Winkel δ verkippt. Dadurch wird das Risiko einer Kollision der Laserbrücke 11 mit dem Werkzeughalter bzw. Werkzeugschaft der Werkzeugspindel 2 vermindert. Allerdings verläuft der Laserstrahl 12 nun nicht mehr parallel zur Z-Achse. Die Werkzeugspindel 2 muss daher während der Messung bezüglich der Z-Richtung so positioniert sein, dass sich der zu vermessende Berührpunkt auf der virtuellen Schneide gerade in der Bezugsebene Mxy befindet. Bei dieser Ausrichtung des Laserstrahls 12 ist also eine exakte Positionierung des Werkzeugs entlang der Z-Richtung erforderlich.

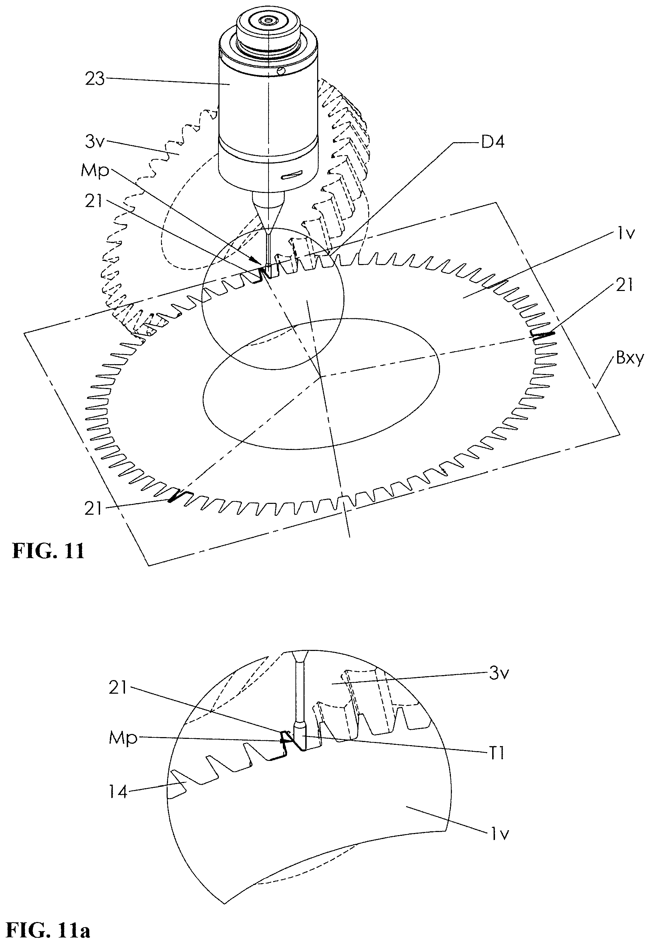

In Figur 11 wird alternativ eine Messung eines Wälzschälwerkzeugs 1v mittels eines taktilen Tasters 23 gezeigt. Der Schneidzahn 14 wird dabei bevorzugt abgescannt. Wegen der berührenden Messung ist ein freies Drehen des Wälzschälwerkzeugs 1v während der Messung nicht möglich. Beim Scanvorgang bewegen sich die CNC-Achsen A, B und X synchron und relativ langsam. Die Z-Achse muss nicht unbedingt verfahren werden. Bei Bedarf kann auch die Y-Achse noch synchron zugeschaltet werden. In der Praxis können an mindestens drei Schneidzähnen 14 entsprechende Messkurven 21 ausgemessen werden. Der Taster 23 verwendet dabei ebenfalls einen zylindrischen Taststift mit zylindrischer Tastfläche T1

In Figur 11a wird der Eingriff der zylindrischen Tastfläche T1 des taktilen Tasters 23 an dem zu scannenden Schneidzahn 14 im Bereich D4 der Figur 11 gezeigt. Bei dieser Abtastung kommt die zylindrische Tastfläche T1 des taktilen Tasters 23 ebenfalls tangential an der verrundeten Schneide S des Wälzschälwerkzeugs 1v zum Einsatz. Hierbei werden aber gescannte Messwerte 21 anstelle der L/0- Signale erzeugt, die in Bezug zur zugehörigen Winkellage Φ um die Werkzeugachse B stehen.

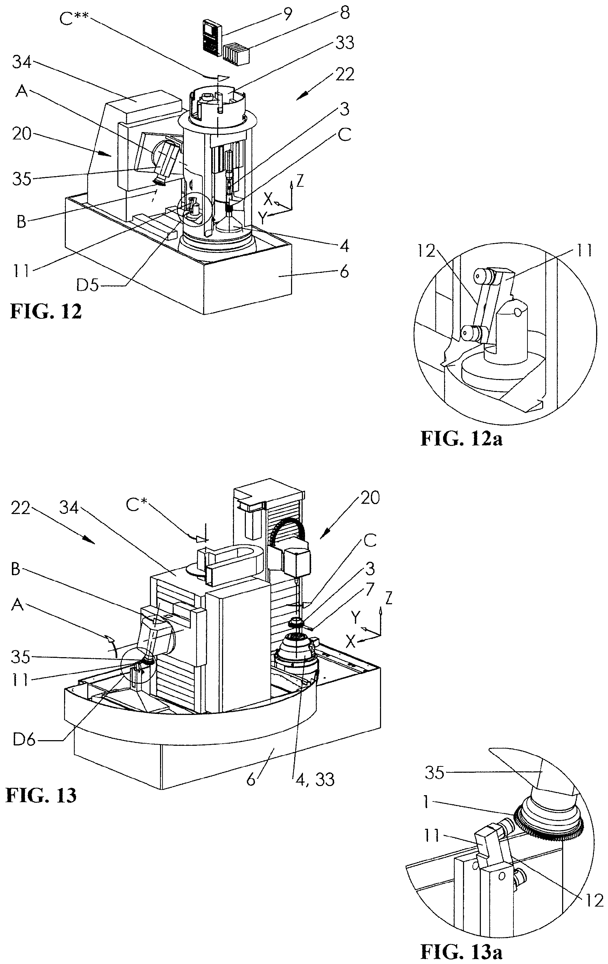

Die Figuren 12 und 13 zeigen mögliche Anordnungen der Laserbrücke 11 auf Wälzschälmaschinen, welche auf der Plattform von traditionellen Verzahnmaschinen aufgebaut werden.

Die Figur 12 illustriert eine Variante einer Wälzschälmaschine, bei der das Messgerät in Form einer Laserbrücke 11 auf einem beweglichen Träger in Form eines Werkstückträgers 33 angeordnet ist. Der Werkstückträger 33 ist um eine vertikale Achse C^{∗} in mehrere Stellungen verschwenkbar. Ein Maschinenkonzept mit einem derartigen beweglichen Werkstückträger ist in US 6,565,418 B1 offenbart. Eine Werkstückspindel 4 ist bezüglich der Schwenkrichtung versetzt (im vorliegenden Beispiel um 90° versetzt) zur Laserbrücke 11 ebenfalls auf dem Werkstückträger 33 angeordnet. Durch ein Verschwenken dieses Werkstückträgers um die Achse C^{∗} kann wahlweise die Werkstückspindel 4 oder die Laserbrücke 11 in eine Position gebracht werden, in der diese mit dem Werkzeug 1 zusammenwirkt. Der Werkstückträger kann eine zweite Werkstückspindel (nicht zeichnerisch dargestellt) tragen, welche um 180° versetzt zur ersten Werkstückspindel angeordnet ist. In der Darstellung der Figur 12 befindet sich diese zweite Werkstückspindel auf der Rückseite dieses Werkstückträgers. Auf diese Weise kann eine Bearbeitung auf einer der Werkstückspindeln erfolgen, während auf der anderen Werkstückspindel ein fertig bearbeitetes Werkstück durch ein neu zu bearbeitendes Werkstück ersetzt werden kann. Dadurch werden unproduktive Nebenzeiten vermieden. Die Werkzeugspindel 2 ist in diesem Maschinenkonzept in einem bewegbaren Wälzschälkopf 35 untergebracht, welcher am Werkzeugträger 34 angeordnet ist, der sich verschiebbar auf einem Maschinenbett 6 befindet.

In der Figur 12a ist ein vergrösserter Ausschnitt aus der Figur 12 im Bereich D5 dargestellt. Wie man aus diesem Ausschnitt erkennt, ist im vorliegenden Beispiel der Laserstrahl 12 der Laserbrücke 11 nicht vertikal ausgerichtet, sondern steht bevorzugt in einem Kippwinkel δ zur Vertikalen. Damit wird erreicht, dass die Laserbrücke 11 innerhalb der Kontur des Werkstückträgers 33 bleiben kann, wodurch das Abdichten des Arbeitsraumes erleichtert wird.

Eine andere Variante einer Wälzschälmaschine ist in der Figur 13 dargestellt. Diese Wälzschälmaschine beruht auf einem Maschinenkonzept, wie es in US 5,857,894 offenbart ist. In dieser Ausführungsform ist die Laserbrücke 11 ortsfest auf einem Maschinenbett 6 angeordnet, und die zum Messen erforderlichen Bewegungen werden durch einen verschieb- und schwenkbaren Werkzeugträger 34 ausgeführt. Die Werkzeugspindel 2 ist in diesem Maschinenkonzept in einem bewegbaren Wälzschälkopf 35 untergebracht, welcher an diesem Werkzeugträger 34 angeordnet ist, der sich auf einem Maschinenbett 6 befindet. Der Werkzeugträger 34 ist um eine vertikale Achse C^{∗} zwischen einer nicht dargestellten Bearbeitungsstellung und der in Figur 13 dargestellten Messstellung verschwenkbar. In der Bearbeitungsstellung ist das Werkzeug 1 so angeordnet, dass es mit dem Werkstück 3 zusammenwirken kann, um dieses zu bearbeiten. In der Messstellung ist das Werkzeug 1 dagegen so angeordnet, dass es mit einem Messgerät in Form einer Laserbrücke 11 zusammenwirken kann. Im vorliegenden Beispiel beträgt der Schwenkwinkel zwischen der Bearbeitungsstellung und der Messstellung 180°. Es sind aber selbstverständlich auch andere Schwenkwinkel denkbar.

In der Figur 13a ist ein vergrösserter Ausschnitt aus der Figur 13 im Bereich D6 dargestellt. Wie man aus diesem Ausschnitt erkennt, ist auch im vorliegenden Beispiel der Laserstrahl 12 der Laserbrücke 11 nicht vertikal ausgerichtet, sondern steht in einem Winkel δ zur Vertikalen. Es ist aber auch eine ortsfeste, vertikale Anordnung der Laserbrücke 11 denkbar.

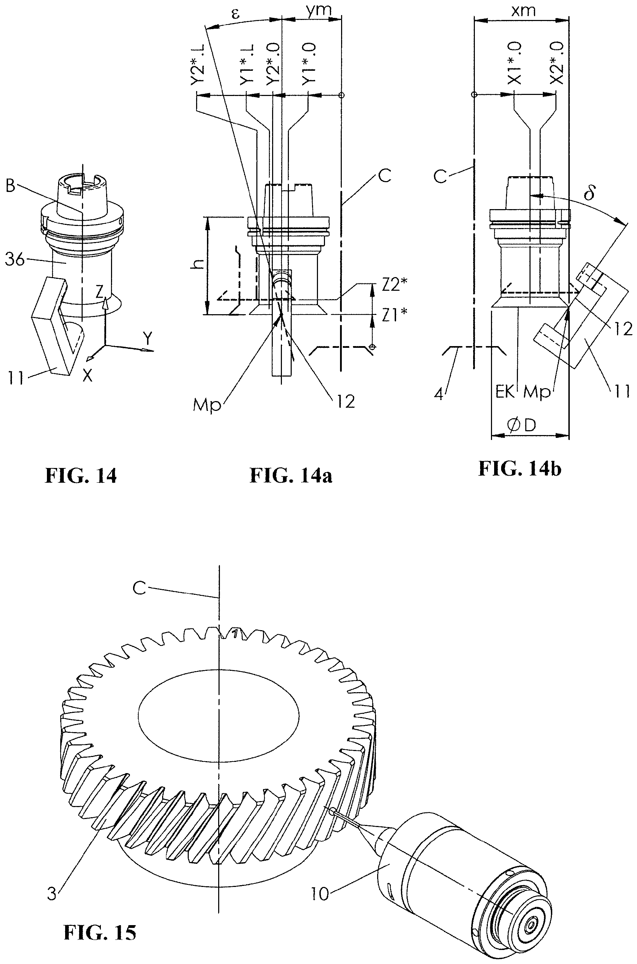

Automatisierte Werkzeugmessungen in einer Verzahnmaschine 22 für die Hartbearbeitung erfordern hochpräzise Relativbewegungen zwischen dem beschriebenen Wirkpaar aus Werkzeug 1 und Messvorrichtung in Messposition Mp. Die vorhandenen Relativbewegungen zwischen dem anderen Wirkpaar aus Werkzeug 1 und Werkstück 3 haben schon generell eine hohe geometrische Grundgenauigkeit im Mikrometerbereich bzw. für rotatorische Achsen im Bereich von Winkelsekunden. Zur sicheren Gewährleistung einer hochpräzisen Messung im Arbeitsraum einer Wälzschälmaschine 22 sollte die Messposition Mp zu Beginn jeder Bearbeitung und bei Bedarf auch zwischendurch automatisch kalibriert werden. Eine mögliche Vorgehensweise hierzu wird im Folgenden anhand der Figuren 14, 14a und 14b erläutert.

Figur 14 zeigt einen Kalibrierdorn 36 in einer nicht dargestellten Wälzschälmaschine 22 mit Koordinatensystem für die Achsen X, Y und Z. Der Kalibrierdorn 36 mit einer definierten Höhe h (siehe Figur 14a) und einem definierten Kalibrierdurchmesser ØD (siehe Figur 14b) wird von der nicht dargestellten Werkzeugspindel 2 aufgenommen und in die Kalibrierebene EK auf Position Z1^{∗} verfahren. In dieser Ebene befindet sich auch die Messposition Mp der Laserbrücke 11. Wenn also in Figur 14a zuerst der Kalibrierdorn 36 von einer geeigneten X-Position startet und mit der Y-Achse in Richtung Messposition Mp bewegt wird, schneidet dieser mit seinem Kalibrierdurchmesser ØDden Laserstrahl 12, und dieser wird ausgeblendet. Dabei entsteht in der Laserbrücke 11 ein 0-Signal 27, welches in der CNC-Steuerung 8 die Y-Position Y1^{∗}.0 markiert. Fährt die Y-Achse weiter, dann gibt der Kalibrierdurchmesser ØD den Laserstrahl 12 frei und dabei entsteht analog zum O-Signal 27 ein L-Signal 26, welches in der CNC-Steuerung 8 die Y-Position Y1^{∗}.L markiert. Mittels CNC-Steuerung 8 wird die Mitte zwischen beiden Y-Positionen als Abstand ym zwischen Laserstrahl 12 und Werkstückachse C definiert. Für die hochpräzise Kalibrierung des Messpunktes Mp ist dies aber noch nicht ausreichend. Auch die exakte Winkellage ε des Laserstrahles 12 in der Ebene Y-Z muss erfasst bzw. eingestellt werden.

Im Rahmen der Erfindung könnte in jeder beliebigen Winkellage ε die Messung eines Wälzschälwerkzeugs 1 erfolgen, wobei natürlich bevorzugt die vertikale Lage zum Einsatz kommt. Deshalb ist ein zweiter Kalibrierschritt auf einer höheren Z-Position Z2^{∗} sinnvoll, wobei analog die Y-Positionen Y2^{∗}.0 und Y2^{∗}.L markiert und ausgewertet werden. Bei noch höheren Genauigkeitsanforderungen können auch in weiteren Z-Positionen Kalibrierschritte durchgeführt werden Mit diesen Werten kann die CNC- Steuerung 8 die Winkellage ε hochpräzis bestimmen. Schneidet bei dieser Kalibrierung in Y-Richtung der Laserstrahl 12 den Kalibrierdurchmesser ØDnicht, dann muss in X-Richtung zugestellt werden.

Der nächste Schritt beim Kalibrieren erfolgt in X-Richtung zur Ermittlung des Abstandes xm und der Winkellage δ, dargestellt in Fig. 14b. Da in den vorhergehenden Schritten zum Kalibrieren der ym-Abstand des Laserstrahls 12 zur Werkstückachse C ermittelt wurde, kann die Y-Achse mit Werkzeugspindel 2 den rotationssymmetrischen Kalibrierdorn 36 auf diese Position fahren. Beim Start steht diese Werkzeugspindel 2 auf der Null-Position der X-Achse und auf der Z1 ^{∗}-Position der Kalibrierebene EK. Nunmehr fährt die Werkzeugspindel 2 den Kalibrierdorn 36 in X-Richtung soweit vor, bis der Kalibrierdurchmesser ØDden Laserstrahl 12 schneidet und dabei nach obiger Beschreibung ein 0-Signal 27 generiert, welches in der CNC- Steuerung 8 die X-Position X1^{∗}.0 markiert und damit den xm-Abstand des Laserstrahles von der Werkstückachse C definiert. Mit einem analogen Kalibriervorgang auf Höhe Z2^{∗} kann der Kipp-Einstellwinkel δ in der Ebene X-Z ermittelt werden.

Nach jedem Kalibriervorgang können damit in der CNC- Steuerung 8 kalibrierte Abstände ym und xm und die relevanten Winkellagen δ und ε für die Messposition Mp abgelegt und für weitere Messungen verwendet werden.

Die Beschreibung dieses Kalibriervorganges zeigt aber auch, dass eine bevorzugte Messung des Wälzschälwerkzeugs 1 in der Kalibrierebene EK von Winkelfehlern weitgehend unabhängig ist und deshalb auch bei einem exakt zylindrischen Laserstrahl 12 vorteilhaft zum Einsatz kommen kann.

Die Figur 15 illustriert eine optionale Post-Prozess-Messung am geschälten Werkstück 3 mittels eines scannenden Tasters 10, welcher bevorzugt an der Werkzeugspindel 2 angeordnet werden kann. Diese Messung erfolgt z.B. in mindestens drei Zahnlücken nach der herkömmlichen Grundkreismessung. Anhand der Messergebnisse werden bei Bedarf weitere Korrekturen der Einstellwerte für die Werkstückbearbeitung durchgeführt. Hiermit kann eine optimale Qualitätssicherung erreicht werden.

Das Werkzeug wird in allen vorliegenden Zeichnungen stark schematisch dargestellt. Des Weiteren liegen bei dem Werkzeug der vorstehenden Zeichnungen die Spanflächen aller Schneidzähne in einer gemeinsamen Ebene. Die vorstehenden Überlegungen sind jedoch nicht auf das dargestellte Werkzeug beschränkt, sondern lassen sich für beliebige Wälzschälwerkzeuge, auch solche mit Treppenschliff oder anderen geometrischen Gestaltungen, oder andere zahnradförmige Werkzeuge anwenden.

Insgesamt ermöglicht das hier vorgeschlagene Verfahren folgende Vorteile:
- Berührungslose, schnelle und hochpräzise In-Prozess-Messung mittels Laserbrücke 11 zu Beginn und während der Bearbeitung eines Werkstückloses, wobei alle Messwerte in der Steuerung abgespeichert werden.
- Durch einen fortlaufenden Vergleich der aktuellen Messwerte mit den Startwerten können massliche Änderungen an der Schneide erkannt werden, zum Beispiel der Verschleiss V (siehe Figur 6b).
- Direkte Erfassung der räumlich wirkenden, gerundeten Schneide S mit der Ausgleichskurve 17, welche bei der Wälzschälbearbeitung durch ihre Hüllschnitte die finale Zahnflanke am geschälten Werkstück 3 erzeugt und damit auch definiert.
- Bei der Bearbeitung einer Serie von Werkstücken kann das zeitaufwendige Finden der geeigneten Einstellwerte für die CNC-Achsen der Wälzschälmaschine durch eine exakte Vermessung der wirkenden Schneiden deutlich vermindert werden, wobei verfahrensbedingter Ausschuss weitgehend vermieden wird.

Zusammenfassend weist das hier vorgeschlagene Verfahren folgende Besonderheiten auf:
- Zur Messung kann eine zylindrische Tastfläche zum Einsatz kommen, welche tangential an der verrundeten Schneide anliegt.
- Die zylindrische Tastfläche ist derart angeordnet, dass sie im jeweiligen Berührpunkt auf der gekrümmten Zahnflanke des Werkstücks in der zugehörigen Tangentialebene liegt und dabei vorzugsweise in Richtung des entsprechenden Schrägungswinkels ausgerichtet ist.

- Als zylindrische Tastfläche wird bevorzugt ein exakt kreisrunder, zylindrischer, hochpräziser Laserstrahl eingesetzt. Als Beispiel für andere Realisierungsformen der Erfindung kann auch ein taktiler Messtaster mit einem zylindrischen Tasteinsatz verwendet werden. Nachteilig sind hierbei allerdings die langen Messzeiten, das taktile Abtasten und die aufwändige Signalverarbeitung.
- Der messende Laserstrahl liegt also in der Tangentialebene eines entsprechenden Berührpunktes auf der gekrümmten Zahnflanke des Werkstücks und müsste beim Messen in anderen Berührpunkten in den zugehörigen Schrägungswinkel eingeschwenkt werden. Dieser punktuelle Schrägungswinkel auf einer Zahnflanke vergrössert sich mit zunehmender Zahnhöhe. Die Ausrichtung des Laserstrahles und damit auch die Einstellung einer entsprechenden Messeinrichtung wird durch diesen Schrägungswinkel und den Werkzeugeinstellwinkel bestimmt, wobei in der Summe ein einstellbarer Winkelbereich von ca. 0 bis 90° für den Laserstrahl erforderlich wäre.
- In der Praxis wäre es aber hinsichtlich der Kosten eher nachteilig, wenn die Messeinrichtung mit dem Laserstrahl diese Bewegungen ausführen müsste. Vorteilhaft kann daher der Laserstrahl quasi fest und vertikal im Arbeitsraum der Wälzschälmaschine angeordnet werden, und die Einstellung der Ausrichtung zwischen Laserstrahl und Werkzeugachse wird stattdessen durch die vorhandene CNC-Schwenkeinrichtung der Werkzeugspindel realisiert. Entsprechend können auch die linearen Zustellungen von den vorhandenen CNC-Achsen X, Y und Z realisiert werden. Die Maschinen-Einstellwerte sind dazu entsprechend der Messposition zu berechnen. Ausserdem ist es vorteilhaft, die quasi feste Messposition beabstandet zur Werkstückposition anzuordnen, damit genügend kollisionsfreier Raum zur Positionierung der Werkzeugspindel mit Werkzeug vorhanden ist.
- Mittels fest angeordnetem Laserstrahl können dann im Bereich der zahnförmigen, verrundeten Schneiden am rotierenden Wälzschälwerkzeug mehrere, bevorzugt mindestens fünf radiale Messspuren bei definierter Drehzahl abgetastet werden, wobei jede Messspur bei fest eingestellten Werten der Werkzeugeinstellwinkel abgefahren wird. Der jeweilige berechnete Berührpunkt pro Flanke wird durch lineare und rotatorische Zustellungen in den Achsen X, Y, Z, A und B in der Messposition am Laserstrahl positioniert. Mit dem Laserstrahl kann durch den abwechselnden Unterbruch beim Verdrehen des zahnförmigen Werkzeugs sehr leicht ein sicheres und einfaches L/0-Signal erzeugt werden. Nach der Vermessung einer Schneidenseite kann analog, aber mit geänderten Einstellwerten, die andere Schneidenseite vermessen werden.
- Wird nun ein Schneidzahn am Werkzeug auf einer Messspur am Laserstrahl vorbei bewegt, dann kann dieser den Berührpunkt einfach mittels L/0-Signal erkennen, und der entsprechende Winkelwert der rotierenden CNC-Werkzeugspindel kann erfasst werden. Diese Winkelwerte und die Einstellwerte für die radialen Messpuren können tabellarisch in der CNC-Steuerung abgespeichert und dann für die verschiedensten verzahnungstypischen Messungen verwendet werden.

Das hier vorgeschlagene Verfahren wurde vorstehend anhand von Beispielen erläutert, bei denen eine zylindrische Tastfläche (z.B. in Form eines Laserstrahls) die Schneide tangential abtastet. Dabei war ein wichtiger Aspekt, dass jeweils ein virtueller Berührpunkt auf einer virtuellen Schneide berechnet wird und die Messung in einer Orientierung und translatorischen Position zwischen Schneide und Messgerät ausgeführt wird, die von der Lage des virtuellen Berührpunkts auf der Schneide abhängt. Zumindest ein Teil der vorstehend genannten Vorteile kann dabei auch erreicht werden, indem eine Tastfläche verwendet wird, die nicht von zylindrischer Form ist. Z.B. ist es denkbar, einen Laserstrahl zu verwenden, der auf den Berührpunkt fokussiert ist. Auch ist es denkbar, ein nichtzylindrisches, körperliches Tastmittel einzusetzen, z.B. in Form einer Kugel.

Zumindest ein Teil der genannten Vorteile kann zudem auch erreicht werden, indem nicht eine tangentiale Abtastung durchgeführt wird, sondern die Schneide auf andere Weise vermessen wird, z.B. durch Abstandsmessungen mittels Triangulationsverfahren oder einer 3D-Scan-Messung. Das vorstehend vorgestellte Verfahren ist insofern nicht auf eine tangentiale Abtastung mittels zylindrischer Tastflächen beschränkt.

### BEZUGSZEICHENLISTE

- 1: Wälzschälwerkzeug
- 1v: virtuelles Wälzschälwerkzeug
- 2: Werkzeugspindel
- 3: Werkstück, Zahnrad
- 3v: virtuelles Werkstück
- 4: Werkstückspindel
- 5: Zustellschlitten
- 6: Maschinenbett
- 7: Einzentriersonde
- 8: CNC-Steuerung
- 9: Bedientafel
- 10: scannender Messtaster
- 11: Laserbrücke
- 12: Laserstrahl
- 13: Flächenkurven
- 14: Schneidzahn
- 15: Schneidzahnmitte
- 16: Kante am Übergang Schneidenradius zur Freifläche
- 17: Ausgleichskurve
- 18: Spanfläche
- 19: Spanflächenfase
- 20: Arbeitsraum einer Wälzschälmaschine
- 21: gescannte Messkurve, Messwerte
- 22: Wälzschälmaschine, Verzahnmaschine
- 23: taktiler Messtaster
- 24: Bewegungsbahn eines Berührpunktes
- 25: L/0-Signalband
- 26: L- Signal
- 27: 0- Signal
- 28: Schneide, links
- 29: Schneide, rechts
- 30: Schneide am Fuss
- 31: Schneide am Kopf
- 32: Lot an der Schneide
- 33: Werkstückträger
- 34: Werkzeugträger
- 35: Wälzschälkopf
- 36: Kalibrierdorn
- 37: Schneidenrohling

- A: Schwenkachse der Werkzeugspindel
- B: Werkzeugachse
- Bxy: Werkzeugbezugsebene im Stirnschnitt
- C: Werkstückachse
- Ct: Tangentialebene im Berührpunkt eines Werkzeugs mit einem Werkstück
- Cz: Zahnflanke am Werkstück
- C^{∗}: Schwenkachse des Werkzeugträgers
- C^{∗∗}: Schwenkachse des Werkstückträgers
- D1 bis D6: Detailbereiche in den Figuren
- ØD: Kalibrierdurchmesser am Kalibrierdorn
- EK: Kalibrierebene auf Position Z 1^{∗}
- h: Höhe am Kalibrierdorn
- K: Koordinatensystem der Maschine mit X- und Y- Ursprung in der Werkstückachse C
- Mp: Messposition
- Mxz: vertikale Ebene durch die Mitte des Laserstrahles in X- Richtung;
- Myz: vertikale Ebene durch die Mitte des Laserstrahles in Y-Richtung;
- Mxy: horizontale Mittenebene der Laserbrücke
- ml bis m5: virtuelle Berührpunkte auf der Schneide
- nB: Drehzahl der Werkzeugspindel
- R: Rundlauf des Wälzschälwerkzeugs
- R1 bis R5: Radien der Messspuren am Wälzschälwerkzeug
- r1 bis r5: Radien an der Schneide
- S: virtuelle Schneide
- S1 bis S5: Schnittflächen am Schneidzahn, senkrecht zur Spanfläche und rechtwinklig zur Ausgleichskurve
- T1 bis T5: zylindrische Tastflächen, die tangential an einer verrundeten Schneide anliegen
- V: Verschleiss an der Schneide
- X: translatorische CNC-Achse
- X1 ^{∗}0: X- Position beim Kalibrieren auf Kalibrierebene EK
- X2^{∗}.0: X- Position beim Kalibrieren auf Z- Position Z2^{∗}
- xm: X-Abstand des Laserstrahles zur Werkstückachse
- Y: translatorische CNC-Achse
- Yl ^{∗}.0: Y- Position beim Kalibrieren auf Kalibrierebene EK mit 0- Signal an der Laserbrücke
- Y1^{∗}.L: Y- Position beim Kalibrieren auf Kalibrierebene EK mit L- Signal an der Laserbrücke
- Y2^{∗}.0: Y- Position beim Kalibrieren auf Z- Position Z2^{∗}mit 0- Signal an der Laserbrücke
- Y2^{∗}.L: Y- Position beim Kalibrieren auf Z- Position Z2^{∗}mit L- Signal an der Laserbrücke
- ym: Y-Abstand des Laserstrahles zur Werkstückachse
- Z: translatorische CNC-Achse
- Z1^{∗}: Z- Position beim Kalibrieren auf Kalibrierebene EK
- Z2^{∗}: Z- Position beim Kalibrieren; erhöht
- Z1 bis Z5: Z- Höhe des Berührpunktes auf dem Werkzeug, bezogen auf die Schneidzahnmitte 15
- zl bis z75: Zahnnummer des Werkzeugs, z. B. z75
- β: Schrägungswinkel im Teilkreis
- β1 bis ß5: Schrägungswinkel der Werkstückflanke bei verschiedenen Zahnhöhen
- δ: Kipp- Einstellwinkel des Laserstrahles zur Rotationsachse der Werkstückspindel in X- Richtung
- ε: Winkellage des Laserstrahles zur Rotationsachse der Werkstückspindel in Y-Richtung
- Δ: Toleranzbereich
- Σ: Werkzeugeinstellwinkel in der Achsstellung zum Bearbeiten
- Σ1 bis Σ5: Werkzeugeinstellwinkel in der Achsstellung zum Messen
- τ: Teilungswinkel
- Φ1 bis Φ5: Winkelpositionen der CNC- Werkzeugspindel

## Patentansprüche

1. Verfahren zur Vermessung eines Werkzeugs (1) für die Wälzbearbeitung verzahnter Werkstücke (3), insbesondere eines Wälzschälwerkzeugs oder eines Wälzstosswerkzeugs, wobei das Werkzeug um eine Werkzeugachse (B) drehbar ist und eine Mehrzahl von Schneidzähnen (14) aufweist, wobei jeder der Schneidzähne eine reale Schneide bildet, und wobei das Verfahren unter Einsatz eines Messgeräts (11; 23) ausgeführt wird,
**dadurch gekennzeichnet, dass** das Verfahren die folgenden Schritte aufweist:
(a) Berechnen eines virtuellen Berührpunkts (ml bis m5) auf einer virtuellen Schneide (S) eines virtuellen Werkzeugs (1v), wobei sich die virtuelle Schneide (S) entlang einer Schneidenlängsrichtung erstreckt und quer zur Schneidenlängsrichtung eine Abrundung aufweist, wobei die virtuelle Schneide (S) einer Soll-Schneidengeometrie der realen Schneide entspricht, und wobei die Berechnung des virtuellen Berührpunkts (ml bis m5) derart erfolgt, dass die virtuelle Schneide (S) ein virtuelles Werkstück (3v) mit vorgegebener Sollflankengeometrie am virtuellen Berührpunkt (ml bis m5) berühren würde, wenn das virtuelle Werkzeug mit dem virtuellen Werkstück eine Wälzbewegung ausführt;
(b) Berechnen einer Relativorientierung (Σ1 bis Σ5) zwischen der Werkzeugachse (B) und dem Messgerät (11; 23) sowie einer translatorischen Relativposition zwischen dem Werkzeug (1) und dem Messgerät (11; 23) auf der Basis des berechneten virtuellen Berührpunkts (ml bis m5), so dass mit dem Messgerät (11; 23) eine Messung im virtuellen Berührpunkt (ml bis m5) vorgenommen werden kann;
(c) Einstellen der berechneten Relativorientierung zwischen der Werkzeugachse (B) und dem Messgerät (11; 23) und der berechneten Relativposition zwischen dem Werkzeug (1) und dem Messgerät (11; 23); und
(d) Durchführen einer Messung an der realen Schneide mindestens eines der Schneidzähne (14) des Werkzeugs (1) in der eingestellten Relativorientierung und Relativposition.

2. Verfahren nach Anspruch 1, wobei die vorstehenden Schritte (a) bis (d) für eine Mehrzahl von virtuellen Berührpunkten (ml bis m5) entlang der virtuellen Schneide (S) durchgeführt werden.

3. Verfahren nach Anspruch 2, wobei aus Messergebnissen, die für unterschiedliche Berührpunkte auf derselben realen Schneide ermittelt wurden, eine Ausgleichskurve (17) für die Beschreibung der realen Schneide berechnet wird.

4. Verfahren nach Anspruch 2 oder 3, wobei aus Messergebnissen, die für unterschiedliche Berührpunkte auf derselben realen Schneide ermittelt wurden, mindestens einer der folgenden Parameter bestimmt wird:
- mindestens ein Mass für die Abweichung eines Profils einer mit der realen Schneide gefertigten Flanke zu einer mit der virtuellen Schneide gefertigten virtuellen Flanke;
- mindestens ein Mass für eine Veränderung der realen Schneide während der Wälzbearbeitung.

5. Verfahren nach einem der vorhergehenden Ansprüche, wobei die Messungen in Schritt (d) für eine Mehrzahl von Schneidzähnen (14) durchgeführt werden, und wobei aus den Messungen mindestens einer der folgenden Parameter bestimmt wird:
- Werkzeugrundlauf;
- Schneidzahnmitte;
- Zahnlückenmitte.

6. Verfahren nach einem der vorhergehenden Ansprüche, wobei das Messgerät (11) während der Durchführung des Verfahrens räumlich feststehend angeordnet ist und die Einstellung der Relativorientierung (Σ1 bis Σ5) und der Relativposition erfolgt, indem die Orientierung der Werkzeugachse (B) im Raum und die Position des Werkzeugs (1) im Raum verändert werden.

7. Verfahren nach einem der vorhergehenden Ansprüche, wobei das Messgerät (11; 23) ein berührungslos oder berührend arbeitendes Tastmittel bereitstellt, und wobei die Relativorientierung (Σ1 bis Σ5) und die Relativposition derart berechnet und eingestellt werden, dass das Tastmittel die virtuelle Schneide (S) im berechneten virtuellen Berührpunkt (ml bis m5) tangential berührt.

8. Verfahren nach Anspruch 7,
wobei das Tastmittel von zylindrischer Form ist und eine Zylinderachse, einen Zylinderradius und eine im Abstand des Zylinderradius von der Zylinderachse verlaufende zylindrische Tastfläche definiert,
wobei die Relativorientierung (Σ1 bis Σ5) und die Relativposition derart berechnet und eingestellt werden, dass die Zylinderachse parallel zu einer Tangentialebene auf der virtuellen Schneide (S) im virtuellen Berührpunkt verläuft, und dass die Zylinderachse von dieser Tangentialebene einen Abstand aufweist, der dem Zylinderradius entspricht, und
wobei die Zylinderachse vorzugsweise entlang einer Flanke des virtuellen Werkstücks (3v) verläuft, wenn dieses mit dem virtuellen Werkzeug (1v) in Wälzeingriff steht.

9. Verfahren nach Anspruch 7 oder 8,
- wobei das Tastmittel durch einen Lichtstrahl (12) gebildet wird,
- wobei das Werkzeug (1) zur Durchführung der Messung im Schritt (d) um die Werkzeugachse (B) gedreht wird,
- wobei während der Drehung detektiert wird, bei welchem Ist-Drehwinkel der Lichtstrahl durch die Schneide unterbrochen wird,
- wobei vorzugsweise eine Abweichung zwischen dem detektierten Ist-Drehwinkel und einem für die virtuelle Schneide berechneten Soll-Drehwinkel ermittelt wird, und
- wobei optional die Messung in Schritt (d) für mehrere oder alle Schneidzähne (14) des Werkzeugs (1) durchgeführt wird, indem das Werkzeug (1) genügend weit um die Werkzeugachse (B) gedreht wird, dass mehrere oder alle Schneidzähne (14) nacheinander den Lichtstrahl (12) unterbrechen und wieder freigeben.

10. Verfahren nach einem der vorhergehenden Ansprüche, welches ausserdem mindestens die folgenden Schritte umfasst:
(e) Ermitteln mindestens einer Einstellung für eine Maschinensteuerung (8) aufgrund eines Ergebnisses der Messungen; und
(f) Übergeben der Einstellung an die Maschinensteuerung (8),
wobei die Einstellung bewirkt, dass für die Bearbeitung eines Werkstücks (3) eine Relativposition zwischen dem Werkstück (3) und dem Werkzeug (1) eingestellt wird.

11. Verfahren nach einem der vorhergehenden Ansprüche, wobei das Verfahren ausgeführt wird, während sich das Werkzeug auf einer Werkzeugspindel (2) befindet, mit der auch eine Bearbeitung von Werkstücken (3) stattfindet.

12. Vorrichtung zur Durchführung eines Verfahrens zur Vermessung eines Werkzeugs (1) für die Wälzbearbeitung verzahnter Werkstücke (3), insbesondere eine Wälzschälwerkzeugs oder eines Wälzstosswerkzeugs, wobei das Werkzeug (1) eine Mehrzahl von Schneidzähnen (14) aufweist, wobei jeder der Schneidzähne eine reale Schneide bildet, wobei die Vorrichtung aufweist:
- eine Werkzeugspindel (2) zum Antreiben des Werkzeugs (1) zu einer Drehung um eine Werkzeugachse (B);
- ein Messgerät (11);
- mindestens eine angetriebene Schwenkachse (A), um eine Relativorientierung (Σ) zwischen der Werkzeugachse (B) und dem Messgerät (11) zu verändern; und
- mindestens eine angetriebene Linearachse (X, Y, Z), um eine translatorische Relativposition zwischen dem Werkzeug (1) und dem Messgerät (11) zu verändern,
**dadurch gekennzeichnet, dass** die Vorrichtung eine Steuerung (8) aufweist, die dazu ausgebildet ist, das Verfahren nach einem der Ansprüche 1 bis 11 auszuführen.

13. Vorrichtung nach Anspruch 12,
wobei das Messgerät (11) während der Messung ortsfest angeordnet ist,
wobei die Schwenkachse (A) dazu ausgebildet ist, die Orientierung der Werkzeugachse (B) im Raum relativ zum feststehenden Messgerät (11) zu verändern, und
wobei die mindestens eine Linearachse (X, Y, Z) dazu ausgebildet ist, die translatorische Lage des Werkzeugs (1) im Raum relativ zum Messgerät (11) zu verändern.

14. Vorrichtung nach Anspruch 12 oder 13,
wobei die Vorrichtung ein Maschinenbett (6) sowie einen gegenüber dem Maschinenbett (6) bewegbaren, insbesondere schwenkbaren, Träger (31) aufweist, der gegenüber dem Maschinenbett (6) zwischen mehreren Stellungen bewegbar ist,
wobei das Messgerät (11) auf dem bewegbaren Träger (31) angeordnet ist, und
wobei das Messgerät (11) mittels des bewegbaren Trägers (31) von einer Parkposition in eine Messposition bewegbar ist, und
wobei auf dem bewegbaren Träger (33) vorzugsweise ausserdem mindestens eine Werkstückspindel (4) zum Aufspannen eines zu bearbeitenden Werkstücks (3) angeordnet ist.

15. Vorrichtung nach einem der Ansprüche 12-14,
wobei das Messgerät (11; 23) ein berührungslos arbeitendes Tastmittel bereitstellt, das vorzugsweise von zylindrischer Form ist,
wobei die Steuerung die Relativorientierung (Σ1 bis Σ5) und die Relativkoordinaten derart berechnet und einstellt, dass das Tastmittel die virtuelle Schneide (S) im berechneten virtuellen Berührpunkt (ml bis m5) tangential berührt,
wobei das Messgerät (11) eine Lichtquelle und einen Lichtdetektor aufweist, wobei die Lichtquelle dazu ausgebildet ist, einen Lichtstrahl (12) zu erzeugen, der auf den Lichtdetektor ausgerichtet ist, und wobei das Tastmittel durch mindestens einen Bereich des Lichtstrahls (12) gebildet wird,
wobei die Steuerung derart mit der Werkzeugspindel (2) zusammenwirkt, dass die Werkzeugspindel (2) das Werkzeug (1) zur Durchführung der Messung in der eingestellten Relativorientierung (Σ1 bis Σ5) der Werkzeugachse (B) und bei den eingestellten Relativkoordinaten um die Werkzeugachse (B) dreht, und
wobei der Lichtdetektor dazu ausgebildet ist, während der Drehung zu detektieren, bei welchem Ist-Drehwinkel der Lichtstrahl (12) durch die Schneide unterbrochen wird.

## Claims

1. A method for measuring a tool (1) for the generating machining of toothed workpieces (3), in particular, a hob peeling tool or a gear shaping tool, the tool being rotatable about a tool axis (B) and comprising a plurality of cutting teeth (14), each of the cutting teeth forming a real cutting edge, and the method being carried out using a measuring device (11; 23),
**characterized in that** the method comprises the following steps:
(a) calculating a virtual contact point (m1 to m5) on a virtual cutting edge (S) of a virtual tool (1v), the virtual cutting edge (S) extending along a cutting edge longitudinal direction and having a rounding transversely to the cutting edge longitudinal direction, wherein the virtual cutting edge (S) corresponds to a desired cutting edge geometry of the real cutting edge, and wherein the calculation of the virtual contact point (m1 to m5) is carried out in such a manner that the virtual cutting edge (S) would contact a virtual workpiece (3v) having a predefined desired flank geometry at the virtual contact point (m1 to m5) when the virtual tool carries out a rolling movement with the virtual workpiece;
(b) calculating a relative orientation (Σ1 to Σ5) between the tool axis (B) and the measuring device (11; 23) as well as a translational relative position between the tool (1) and the measuring device (11; 23) on the basis of the calculated virtual contact point (m1 to m5) such that a measurement at the virtual contact point (m1 to m5) can be carried out with the measuring device (11; 23);
(c) setting the calculated relative orientation between the tool axis (B) and the measuring device (11; 23) and the calculated relative position between the tool (1) and the measuring device (11; 23); and
(d) carrying out a measurement on the real cutting edge of at least one of the cutting teeth (14) of the tool (1) in the set relative orientation and relative position.

2. The method as claimed in claim 1, wherein the steps (a) to (d) are carried out for a plurality of virtual contact points (m1 bis m5) along the virtual cutting edge (S).

3. The method as claimed in claim 2, wherein a compensating curve (17) that describes the real cutting edge is calculated from measurement results which have been determined for various contact points on the same real cutting edge.

4. The method as claimed in claim 2 or 3, wherein at least one of the following parameters is determined from measurement results which have been determined for various contact points on the same real cutting edge:
- at least one measure for the deviation of a profile of a flank produced with the real cutting edge from a virtual flank produced with the virtual cutting edge;
- at least one measure for a change in the real cutting edge during the generating machining.

5. The method as claimed in any one of the preceding claims, wherein the measurements are carried out in step (d) for a plurality of cutting teeth (14), and wherein at least one of the following parameters is determined from the measurements:
- concentricity of tool;
- cutting tooth center;
- tooth gap center.

6. The method as claimed in any one of the preceding claims, wherein the measuring device (11) is arranged in a spatially fixed manner during the execution of the method and the setting of the relative orientation (Σ1 to Σ5) and of the relative position is effected by modifying the orientation of the tool axis (B) in space and the position of the tool (1) in space.

7. The method as claimed in any one of the preceding claims, wherein the measuring device (11; 23) provides a sensing means which operates in a contactless or contacting manner, and wherein the relative orientation (Σ1 to Σ5) and the relative position are calculated and set in such a manner that the sensing means contacts the virtual cutting edge (S) at the calculated virtual contact point (m1 to m5) in a tangential manner.

8. The method as claimed in claim 7,
wherein the sensing means has cylindrical shape and defines a cylinder axis, a cylinder radius and a cylindrical sensing surface extending at a distance from the cylinder axis, said distance corresponding to the cylinder radius,
wherein the relative orientation (Σ1 to Σ5) and the relative position are calculated and set in such a manner that the cylinder axis extends parallel to a tangential plane on the virtual cutting edge (S) at the virtual contact point, and that the cylinder axis is at a distance from said tangential plane which corresponds to the cylinder radius, and
wherein the cylinder axis preferably extends along a flank of a virtual workpiece (3v) which is in rolling engagement with the virtual tool (1v).

9. The method as claimed in claim 7 or 8,
- wherein the sensing means is formed by a light beam (12),
- wherein the tool (1) is rotated about the tool axis (B) for carrying out the measurement in step (d),
- wherein the actual angle of rotation at which the light beam is interrupted by the cutting edge is detected during the rotation,
- wherein preferably a deviation between the detected actual angle of rotation and a desired angle of rotation calculated for the virtual cutting edge is determined, and
- wherein optionally the measurement in step (d) is carried out for multiple or all cutting teeth (14) of the tool (1) by the tool (1) being rotated sufficiently far about the tool axis (B) that multiple or all cutting teeth (14) interrupt the light beam (12) and unblock it again one after another.

10. The method as claimed in any one of the preceding claims, additionally comprising at least the following steps:
(e) determining at least one setting for a machine controller (8) on account of a result of the measurements; and
(f) transmitting the setting to the machine controller (8),
wherein the setting causes a relative position between a workpiece (3) and the tool (1) to be set for the machining of said workpiece (3).

11. The method as claimed in any one of the preceding claims, wherein the method is carried out whilst the tool is situated on a tool spindle (2) by way of which machining of workpieces (3) also takes place.

12. A device for carrying out a method for measuring a tool (1) for the generating machining of toothed workpieces (3), in particular, a hob peeling tool or a gear shaping tool, the tool (1) comprising a plurality of cutting teeth (14), each of the cutting teeth forming a real cutting edge, the device comprising:
- a tool spindle (2) for driving the tool (1) for a rotation about a tool axis (B);
- a measuring device (11);
- at least one driven pivot axis (A) in order to modify a relative orientation (Σ) between the tool axis (B) and the measuring device (11); and
- at least one driven linear axis (X, Y, Z) in order to modify a translational relative position between the tool (1) and the measuring device (11),
**characterized in that** the device comprises a controller (8) configured to carry out the method as claimed in any one of claims 1 to 11.

13. The device as claimed in claim 12,
wherein the measuring device (11) is arranged in a stationary manner during the measurement,
wherein the pivot axis (A) is configured to modify the orientation of the tool axis (B) in space relative to the fixed measuring device (11), and
wherein the at least one linear axis (X, Y, Z) is configured to modify the translational position of the tool (1) in space relative to the measuring device (11).

14. The device as claimed in claim 12 or 13,
wherein the device comprises a machine bed (6) and a carrier (31), which is movable, in particular pivotable, in relation to the machine bed (6), the carrier being movable between multiple positions in relation to the machine bed (6),
wherein the measuring device (11) is arranged on the movable carrier (31), and
wherein the measuring device (11) is movable from a park position into a measuring position by means of the movable carrier (31), and
wherein preferably at least one workpiece spindle (4) for clamping a workpiece (3) to be machined is additionally arranged on the movable carrier (33).

15. The device as claimed in any one of claims 12-14,
wherein the measuring device (11; 23) provides a sensing means which operates in a contactless manner, the sensing means preferably having cylindrical shape,
wherein the controller calculates and sets the relative orientation (Σ1 to Σ5) and the relative coordinates in such a manner that the sensing means contacts the virtual cutting edge (S) tangentially at the calculated virtual contact point (m1 to m5),
wherein the measuring device (11) comprises a light source and a light detector, wherein the light source is configured to generate a light beam (12) which is directed at the light detector, and wherein the sensing means is formed by at least one region of the light beam (12),
wherein the controller interacts with the tool spindle (2) in such a manner that the tool spindle (2) rotates the tool (1) about the tool axis (B) to carry out the measurement in the set relative orientation (Σ1 to Σ5) of the tool axis (B) and with the set relative coordinates, and
wherein the light detector is configured to detect the actual rotational angle at which the light beam (12) is interrupted by the cutting edge during the rotation.

## Revendications

1. Procédé de mesure d'un outil (1) pour l'usinage par génération de pièces à usiner dentées (3), en particulier d'un outil de taillage par génération ou d'un outil de taillage par mortaisage, l'outil pouvant tourner autour d'un axe d'outil (B) et comportant une pluralité de dents coupantes (14), chacune des dents coupantes formant une arête de coupe réelle, et dans lequel le procédé est réalisé en utilisant un dispositif de mesure (11; 23),
**caractérisé en ce que** le procédé comprend les étapes suivantes:
(a) calculer un point de contact virtuel (m1 à m5) sur une arête de coupe virtuelle (S) d'un outil virtuel (1v), l'arête de coupe virtuelle (S) s'étendant le long d'une direction longitudinale de l'arête de coupe et ayant un arrondi transversalement à la direction longitudinale de l'arête de coupe ; dans lequel l'arête de coupe virtuelle (S) correspond à une géométrie d'arête de coupe à obtenir de l'arête de coupe réelle, et dans lequel le calcul du point de contact virtuel (m1 à m5) est effectué de telle sorte que l'arête de coupe virtuelle (S) contacterait une pièce à usiner (3v) virtuelle avec une géométrie de flanc à obtenir prédéterminée au niveau du point de contact virtuel (m1 à m5), quand l'outil virtuel effectue un mouvement de taillage avec la pièce à usiner virtuelle;
(b) calculer une orientation relative (Σ1 à Σ5) entre l'axe de l'outil (B) et le dispositif de mesure (11 ; 23) ainsi que d'une position relative translationnelle entre l'outil (1) et le dispositif de mesure (11 ; 23) sur la base du point de contact virtuel calculé (m1 à m5); de sorte qu'une mesure peut être effectuée avec le dispositif de mesure (11 ; 23) au niveau du point de contact virtuel (m1 à m5);
(c) régler l'orientation relative calculée entre l'axe de l'outil (B) et le dispositif de mesure (11 ; 23) et la position relative calculée entre l'outil (1) et le dispositif de mesure (11 ; 23) ; et
(d) effectuer une mesure au niveau de l'arête de coupe réelle (14) d'au moins une des dents coupantes (14) de l'outil (1) dans l'orientation relative et la position relative réglées.

2. Procédé selon la revendication 1, les étapes (a) à (d) ci-dessus étant exécutées pour une pluralité de points de contact virtuels (m1 à m5) le long de l'arête de coupe virtuelle (S).

3. Procédé selon la revendication 2, dans lequel une courbe de compensation (17) pour la description de l'arête de coupe réelle est calculée à partir des résultats de mesure qui ont été déterminés pour différents points de contact sur la même arête de coupe réelle.

4. Procédé selon la revendication 2 ou 3, dans lequel au moins un des paramètres suivants est déterminé à partir des résultats de mesure qui ont été déterminés pour différents points de contact sur la même arête de coupe réelle :
- au moins une mesure pour l'écart d'un profil d'un flanc réalisé avec l'arête de coupe réelle par rapport à un flanc virtuel réalisé avec l'arête de coupe virtuelle;
- au moins une mesure pour un changement de l'arête de coupe réelle pendant le processus de taillage.

5. Procédé selon une des revendications précédentes, dans lequel les mesures de l'étape (d) sont effectuées pour une pluralité de dents coupantes (14), et dans lequel au moins un des paramètres suivants est déterminé à partir des mesures :
- rotation de l'outil ;
- centre de la dent coupante ;
- centre de l'entre-dent entre les dents.

6. Procédé selon l'une des revendications précédentes, dans lequel le dispositif de mesure (11) est fixé dans l'espace pendant l'exécution du procédé et le réglage de l'orientation relative (Σ1 à Σ5) et de la position relative est réalisé en ajustant l'orientation spatiale de l'axe de l'outil (B) et la position de l'outil (1) dans l'espace.

7. Procédé selon l'une des revendications précédentes, dans lequel le dispositif de mesure (11 ; 23) fournit un moyen tactile sans contact ou tactile, et dans lequel l'orientation relative (Σ1 à Σ5) et la position relative sont calculées et réglées de telle manière que le moyen tactile touche tangentiellement l'arête de coupe virtuelle (S) au niveau du point de contact virtuel calculé (m1 à m5).

8. Procédé selon la revendication 7, dans lequel le moyen tactile est de forme cylindrique et définit un axe de cylindre, un rayon de cylindre et une surface tactile cylindrique s'étendant à une distance du rayon de cylindre de l'axe de cylindre, et
dans lequel l'orientation relative (Σ1 à Σ5) et la position relative sont calculées et réglées de telle manière que l'axe du cylindre s'étend en parallèle à un plan tangentiel sur l'arête de coupe virtuelle (S) dans le point de contact virtuel, et en ce que l'axe du cylindre se trouve à une distance de ce plan tangentiel qui correspond au rayon du cylindre.

9. Procédé selon la revendication 7 ou 8,
- dans lequel le moyen tactile est formé par un faisceau lumineux (12),
- dans lequel l'outil (1) étant tourné autour de l'axe d'outil (B) afin d'effectuer la mesure à l'étape (d),
- dans lequel pendant la rotation, il est détecté à quel angle de rotation réel le faisceau lumineux est interrompu par l'arête de coupe,
- dans lequel de préférence un écart entre l'angle de rotation réel détecté et un angle de rotation à obtenir calculé pour l'arête de coupe virtuelle est déterminé, et
- dans lequel la mesure de l'étape (d) est effectuée pour plusieurs ou toutes les dents coupantes (14) de l'outil (1), en faisant tourner l'outil (1) suffisamment loin autour de l'axe de l'outil (B ), de sorte que plusieurs ou toutes les dents coupantes (14) l'une après l'autre interrompent le faisceau lumineux (12) et le libèrent à nouveau.

10. Procédé selon l'une des revendications précédentes, comprenant en outre les étapes suivantes:
(e) déterminer au moins un réglage pour une commande de machine (8) sur la base d'un résultat des mesures ; et
(f) transfert du réglage à la commande de la machine (8), le réglage provoquant le réglage d'une position relative entre la pièce à usiner (3) et l'outil (1) pour l'usinage d'une pièce à usiner (3).

11. Procédé selon l'une des revendications précédentes, dans lequel, dans lequel le procédé est exécuté alors que l'outil se trouve sur une broche porte-outil (2) avec laquelle l'usinage des pièces à usiner (3) est également réalisé.

12. Dispositif de mise en œuvre d'un procédé de mesure d'un outil (1) pour l'usinage par génération de pièces à usiner dentées (3), en particulier d'un outil de taillage par génération ou d'un outil de taillage par mortaisage, l'outil (1) comportant une pluralité de dents coupantes (14), chacune des dents coupantes formant une arête de coupe réelle, le dispositif comportant :
- une broche d'outil (2) pour entraîner l'outil (1) à tourner autour d'un axe d'outil (B) ;
- un dispositif de mesure (11) ;
- au moins un axe de pivotement entraîné (A) pour changer une orientation relative (Σ) entre l'axe d'outil (B) et le dispositif de mesure (11) ; et
- au moins un axe linéaire entraîné (X, Y, Z) pour changer une position relative en translation entre l'outil (1) et le dispositif de mesure (11),
**caractérisé en ce que** le dispositif comporte un contrôleur (8) qui est conçu pour exécuter le procédé selon une des revendications 1 à 11.

13. Dispositif selon la revendication 12,
dans lequel le dispositif de mesure (11) est disposé localement fixe pendant la mesure,
dans lequel l'axe de pivotement (A) est conçu pour changer l'orientation de l'axe d'outil (B) dans l'espace par rapport au dispositif de mesure fixe (11), et
dans lequel l'au moins un axe linéaire (X, Y, Z) est conçu pour modifier la position de translation de l'outil (1) dans l'espace par rapport au dispositif de mesure (11).

14. Dispositif selon la revendication 12 ou 13,
dans lequel le dispositif présente un bâti de machine (6) et un support (31) qui est mobile, en particulier pivotant, par rapport au bâti de machine (6) et qui peut être déplacé entre plusieurs positions par rapport au bâti de machine (6),
dans lequel le dispositif de mesure (11) est disposé sur le support mobile (31) et
dans lequel le dispositif de mesure (11) peut être déplacé d'une position de stationnement dans une position de mesure au moyen du support mobile (31), et
dans lequel au moins une broche porte-pièce (4) pour serrer une pièce à usiner (3) à usiner est de préférence en outre disposée sur le support mobile (33).

15. Dispositif selon l'une des revendications 12 à 14,
dans lequel le dispositif de mesure (11 ; 23) produit un moyen tactile fonctionnant sans contact, qui de préférence a une forme cylindrique,
dans lequel le contrôleur calcule et règle l'orientation relative (Σ1 à Σ5) et les coordonnées relatives de telle sorte que le moyen tactile touche tangentiellement l'arête de coupe virtuelle (S) dans le point de contact virtuel calculé (m1 à m5),
dans lequel le dispositif de mesure (11) comporte une source de lumière et un détecteur de lumière, dans lequel la source de lumière est conçue pour générer un faisceau lumineux (12), qui est dirigé sur le détecteur de lumière, et dans lequel le moyen tactile est formé par au moins une région du faisceau lumineux (12),
dans lequel la commande interagit avec la broche porte-outil (2) de telle sorte que la broche porte-outil (2) fait tourner l'outil (1) autour de l'axe de l' outil (B) pour effectuer la mesure dans l'orientation relative réglée (Σ1 à Σ5) de l'axe de l'outil (B) et avec les coordonnées relatives, et
dans lequel le détecteur de lumière est conçu pour détecter à quel angle réel de rotation le faisceau lumineux (12) est interrompu par l'arête de coupe pendant la rotation.
